# EUROPEAN PATENT APPLICATION

(11) **EP 4 851 039 A1**
(43) Date of publication of application: **09.12.2026**
(21) Application number: 26179882.1
(22) Date of filing: 20.05.2026
(51) Int. Cl.: B64C 11/38, F01D 7/00

(54) **A TURBO ENGINE INCLUDING A SYSTEM TO CONTROL PITCH OF A PROPELLER BLADE**

(30) Priority: 30.05.2025 GB 202508511; 06.10.2025 US 202563894375 P; 28.10.2025 US 202563906900 P; 22.04.2026 US 202619655394
(71) Applicant: GE Aviation Systems Limited, Bishops Cleeve Cheltenham Gloucestershire GL52 8SF (GB)
(72) Inventor: CARRINGTON, Christopher Roy, Gloucester, GL3 4AQ (GB)
(74) Representative: Openshaw & Co.

(57) **Abstract**

An example engine comprising a propeller (104) including a blade (106); a coarse pitch chamber (349); a fine pitch chamber (347); a hydraulic fluid transfer unit (338) including a first gallery (342), a second gallery (343), and a third gallery (344); a beta tube (345a) structured to move to the blade (106) to a pitch angle based on an amount of hydraulic fluid in the coarse pitch chamber (349) or the fine pitch chamber (347); a protection valve (318) including a first input (330), a second input (331), a third input (332), and a valve spool (321), and a ground valve assembly (360, 705) to, when enabled, cause hydraulic fluid to flow to the fine pitch chamber (347) via the first gallery (342).

## Description

### RELATED APPLICATION

This patent claims the benefit of U.S. Provisional Patent Application No. 63/906,900, which was filed on October 28, 2025; U.S. Provisional Patent Application No. 63/894,375, which was filed on October 6, 2025; and British Patent Application Number 2508511.9, which was filed on May 30, 2025. U.S. Provisional Patent Application No. 63/906,900, U.S. Provisional Patent Application No. 63/894,375, and British Patent Application Number 2508511.9 are hereby incorporated herein by reference in their entireties. Priority to U.S. Provisional Patent Application No. 63/906,900, U.S. Provisional Patent Application No. 63/894,375, and British Patent Application Number 2508511.9 is hereby claimed.

### FIELD OF THE DISCLOSURE

The present disclosure relates generally to a turbo engine and, more particularly, to a turbo engine including a system to control pitch of a propeller blade.

### BACKGROUND

Turbo engines (e.g., turbofan engines, ducted fan engines, unducted fan engines, turboprop engines, etc.), such as those used on an aircraft, generally include a propeller/fan and a gas turbine engine to drive the propeller/fan to produce thrust. In some configurations, the propeller/fan has variable pitch blades. As such, the pitch of the blades can be changed during different phases of operation.

### BRIEF DESCRIPTION OF THE DRAWINGS

A full and enabling disclosure of the presently described technology, including the best mode thereof, directed to one of ordinary skill in the art, is set forth in the specification, which makes reference to the appended Figs., in which:
FIG. 1A is a schematic cross-sectional view of an example turbo engine in which examples disclosed herein can be implemented.
FIG. 1B is a schematic cross-sectional view of an example turboprop in which examples disclosed herein can be implemented.
FIG. 2 includes side views of blades of the propeller of the one or more engines of FIGS. 1A and 1B in three different pitch angles.
FIG. 3 illustrates an example implementation of the pitch control protection system of FIGS. 1A and 1B with a protection valve in a first position.
FIG. 4 illustrates an example implementation of the pitch control protection system of FIGS. 1A and 1B with a protection valve in a second position.
FIG. 5 illustrates an example implementation of the pitch control protection system of FIGS. 1A and 1B with a protection valve in a third position.
FIG. 6 illustrates an example implementation of the pitch control protection system of FIGS. 1A and 1B with a protection valve in a fourth position.
FIG. 7 illustrates an example implementation of the pitch control protection system of FIGS. 1A and 1B with a ground range valve in a first position.
FIG. 8 illustrates an example implementation of the pitch control protection system of FIGS. 1A and 1B with a ground range valve in a second position.
FIG. 9 illustrates an example implementation of the pitch control protection system of FIGS. 1A and 1B with a protection valve in a first position.
FIG. 10 illustrates an example implementation of the pitch control protection system of FIGS. 1A and 1B with a protection valve in a second position.
FIG. 11 illustrates example functions that may be implemented by a protection valve controller of FIGS. 3-10.
FIG. 12 is a block diagram of an example implementation of the protection valve controller of FIGS. 3-10.
FIG. 13 is a flowchart representative of example machine-readable instructions and/or operations that may be executed, instantiated, and/or performed by programmable circuitry to implement the protection valve controller of FIG. 12.
FIG. 14 is a block diagram of an example processing platform including programmable circuitry structured to execute, instantiate, and/or perform the example machine-readable instructions and/or perform the example operations of FIG. 13 to implement the protection valve controller of FIG. 12.

The figures are not to scale. Instead, the thickness of regions may be enlarged in the drawings. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" and/or "direct contact" with another part means that there is no intermediate part between the two parts.

### DETAILED DESCRIPTION

Reference now will be made in detail to embodiments or examples of the presently described technology, one or more examples of which are illustrated in the drawings. Each example is provided by way of explanation of the presently described technology, not limitation of the presently described technology. In fact, it will be apparent to those skilled in the art that various modifications and variations can be made in the presently described technology without departing from the scope or spirit of the presently described technology. For instance, features illustrated or described as part of one embodiment or example can be used with another embodiment or example to yield a still further embodiment or example. Thus, it is intended that the presently described technology covers such modifications and variations as come within the scope of the appended claims and their equivalents.

When introducing elements of various embodiments of the present disclosure, the articles "a," "an," "the," and "said" are intended to mean that there are one or more of the elements. As used herein, the terms "first," "second," and "third" may be used interchangeably to distinguish one component from another and are not intended to signify location or importance of the individual components. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object.

The terms "upstream" and "downstream" refer to the relative direction with respect to fluid flow in a fluid pathway. For example, "upstream" refers to the direction from which the fluid flows, and "downstream" refers to the direction to which the fluid flows. As used herein, the terms "axial" and "longitudinal" both refer to a direction parallel to the centerline axis of a gas turbine engine (e.g., a core turbine engine, turbo-machinery, etc.), while "radial" refers to a direction perpendicular to the axial direction, and "tangential" or "circumferential" refers to a direction mutually perpendicular to the axial and radial directions. Accordingly, as used herein, "radially inward" refers to the radial direction from the outer circumference of the gas turbine engine towards the centerline axis of the gas turbine engine, and "radially outward" refers to the radial direction from the centerline axis of the gas turbine engine towards the outer circumference of the gas turbine engine.

As used herein a "port" is an opening in a device (e.g., such as a valve) which fluid can flow into or out from. In some examples, a port may be referred to as an input (a port with fluid flowing in) and/or an output (a port with fluid flowing out).

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a," "an," "first," "second," etc.) do not exclude a plurality. The term "a" or "an" entity, as used herein, refers to one or more of that entity. The terms "a" (or "an"), "one or more," and "at least one" can be used interchangeably herein. Additionally, although individual features may be included in different examples or claims, these may possibly be combined, and the inclusion in different examples or claims does not imply that a combination of features is not feasible and/or advantageous.

Some turbo engines used on aircraft, such as ducted fan engines, hybrid engines, turboprop engines, hybrid turboprop propellers, unducted fan engines, electric propulsion engines, and high bypass turbofan engines have variable pitch blades or vanes. In particular, the pitch (e.g., angle) of the blades relative to the incoming airflow can be changed during operation of the engine. This enables optimal operation of the turbo engine during the various flight phases. These types of engines include a blade pitch control system to control the pitch of the blades. The blade pitch control system is hydraulically powered. Some turbo engines utilize protection systems (also referred to as pitch control protection systems) to automatically adjust blade pitch in the event of a failure or when blade propeller speed is too high, and/or enable ground range (e.g., low pitch angle). For example, in the event of failure of the hydraulic system and/or engine shut down during flight, it is desirable for the blades to move to a certain pitch position, referred to as a feather position, in which the blades cause the least (e.g., minimal) amount of resistance or drag. Protection systems can provide for auto-feathering or automatically moving the blades to the feather position to minimize resistance or drag. In some instances, the feather position corresponds to a position or angle in which the blades are substantially aligned (e.g., ±5°) with the direction of the incoming airflow. Ground range corresponds to moving the blade to a low pitch angle (e.g., for inspection or maintenance). Accordingly, protection systems may prevent the blade from going to such a fine pitch unless the aircraft is grounded (e.g., not in flight).

Traditional pitch control protection systems include a complex system of multiple valves (e.g., 9 valves) to implement pitch control protection. However, such systems require multiple components, which increases cost, space, weight, and the risk of failure. Examples disclosed herein protect pitch control protection with less valves (e.g., 4 or 5 valves). Accordingly, examples disclosed herein result in a cheaper, smaller, lighter, less complex, and more reliable pitch control protection system than previous techniques. Examples disclosed herein include a pressure relief valve, a primary control valve, a protection valve, and one or more ground range valves. The pressure relief valve releases pressure from a pump. The primary control valve controls the pitch of the blades based on user and/or system instructions by pumping hydraulic fluid into a first or second chamber of a piston assembly. As hydraulic fluid is pumped into the first or second chamber, a piston of the piston assembly moves in a first direction or a second direction. The movement of the piston is translated to movement of the pitch of the blade. The protection valve facilitates the pitch control of the primary control valve and overrides (e.g., blocks the fluid output by) the primary control valve in particular situations (e.g., loss of power, error in the main controller, propeller speed too high, blade pitch not matching instructions, etc.). The protection valve is structured to allow the primary valve to pump hydraulic fluid into the first or second chamber of the piston assembly. Additionally, the protection valve can override the primary control valve to halt pitch of the blade or change the pitch of the blade to provide alternative feathering (e.g., auto-feathering) and/or enable a ground range of the pitch.

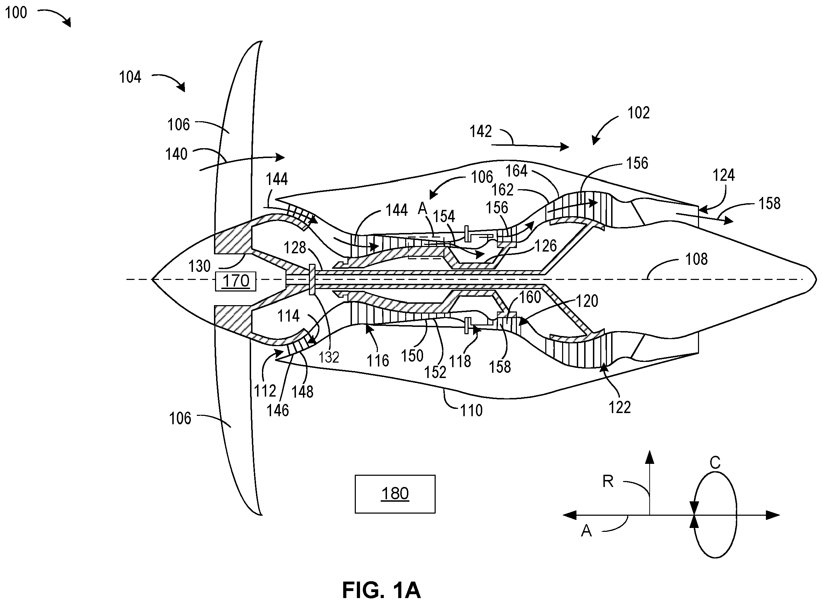

Referring now to the drawings, wherein identical numerals indicate the same elements throughout the figures, FIG. 1A is a schematic cross-sectional view of an example turbo engine assembly 100 (herein also referred to as a turbo engine assembly) that can incorporate various examples disclosed herein. The principles of the present disclosure are also applicable to other types of engines, such as turbofan engines (e.g., high-bypass turbofan engines, low-bypass turbofan engines), unducted fan (UDF) engines (sometimes referred to as propfans), electric motor drive propellers, and/or other types of engines having a propulsor (e.g., a fan, a propeller, etc.) with variable pitch blades or vanes. Further, the examples disclosed herein can also be used in connection with other types of applications, such as electric fans or wind turbines having variable pitch fans.

As shown in FIG. 1A, the turbo engine assembly 100 includes a gas turbine engine 102 (which may also be referred to as a core turbine engine or turbo-machinery) and a propeller 104 including a plurality of blades 106 (sometimes referred to as rotors, fan blades, or vanes). The propeller 104 can include any number of blades 106. The gas turbine engine 102 is disposed downstream from the propeller 104 and drives the blades 106 of the propeller 104 to produce forward thrust. In some examples, the propeller 104 is positioned behind the gas turbine engine 102. As shown in FIG. 1A, a propeller axis of the turbo engine assembly 100 and/or the gas turbine engine 102 define a longitudinal or axial centerline axis 108 extending therethrough for reference. However, in some examples, the propeller axis might not be aligned with the axial centerline axis 108. For example, some engine assemblies may include an offset gearbox causing the propeller axis to be different than the axial centerline axis 108. FIG. 1A also includes an annotated directional diagram with reference to an axial direction A, a radial direction R, and a circumferential direction C. In general, as used herein, the axial direction A is a direction that extends generally parallel to the centerline axis 108, the radial direction R is a direction that extends orthogonally outward from or inward toward the centerline axis 108, and the circumferential direction C is a direction that extends concentrically around the centerline axis 108. Further, as used herein, the term "forward" refers to a direction along the centerline axis 108 in the direction of movement of the turbo engine assembly 100, such as to the left in FIG. 1A, while the term "rearward" refers to a direction along the centerline axis 108 in the opposite direction, such as to the right in FIG. 1A.

The gas turbine engine 102 includes a substantially tubular outer casing 110 (which may also be referred to as a mid-casing) that defines an annular inlet 112. The outer casing 110 of the gas turbine engine 102 can be formed from a single casing or multiple casings. The outer casing 110 encloses, in serial flow relationship, a compressor section having a booster or low pressure compressor 114 ("LP compressor 114") and a high pressure compressor 116 ("HP compressor 116"), a combustion section 118 (which may also be referred to as the combustor 118), a turbine section having a high pressure turbine 120 ("HP turbine 120") and a low pressure turbine 122 ("LP turbine 122"), and an exhaust section 124. The gas turbine engine 102 includes a high-pressure shaft or spool 126 ("HP shaft 126") that drivingly couples the HP turbine 120 and the HP compressor 116. The gas turbine engine 102 also includes a low-pressure shaft or spool 128 ("LP shaft 128") that drivingly couples the LP turbine 122 and the LP compressor 114. The LP shaft 128 also couples to a propeller spool or shaft 130 (sometimes referred to as a fan shaft). The blades 106 are coupled to and extend radially outward from the propeller shaft 130. In this example, the blades 106 are variable pitch blades. As such, the pitch of the blades 106 can be changed during operation of the turbo engine assembly 100 to improve efficiency and achieve certain flow characteristics during different phases of flight. Example systems for changing the pitch of the blades 106 are disclosed in further detail herein. In some examples, the LP shaft 128 may couple directly to the propeller shaft 130 (i.e., a direct-drive configuration). In alternative configurations, the LP shaft 128 may couple to the propeller shaft 130 via a reduction gear 132 (i.e., an indirect-drive or geared-drive configuration). While in this example the gas turbine engine 102 includes two compressors and two turbines, in other examples, the gas turbine engine 102 may only include one compressor and one turbine. Additionally, some components may be removed, added, and/or combined for different types of turbo propeller engine assemblies.

As illustrated in FIG. 1A, during operation of the turbo engine assembly 100, incoming air 140 enters the propeller 104 and is accelerated by the blades 106. A first portion 142 of the air 140 flows along the outside of the gas turbine engine 102, while a second portion 144 of the air 140 flows into the inlet 112 of the gas turbine engine 102 (and, thus, into the LP compressor 114). One or more sequential stages of LP compressor stator vanes 146 and LP compressor rotor blades 148 coupled to the LP shaft 128 progressively compress the second portion 144 of the air 140 flowing through the LP compressor 114 en route to the HP compressor 116. Next, one or more sequential stages of HP compressor stator vanes 150 and HP compressor rotor vanes 152 coupled to the HP shaft 126 further compress the second portion 144 of the air 140 flowing through the HP compressor 116. This provides compressed air 154 to the combustion section 118 where the compressed air 154 mixes with fuel and burns to provide combustion gases 156.

The combustion gases 156 flow through the HP turbine 120 where one or more sequential stages of HP turbine stator vanes 158 and HP turbine rotor blades 160 coupled to the HP shaft 126 extract a first portion of kinetic and/or thermal energy. This energy extraction supports operation of the HP compressor 116. The combustion gases 156 then flow through the LP turbine 122 where one or more sequential stages of LP turbine stator vanes 162 and LP turbine rotor blades 164 coupled to the LP shaft 128 extract a second portion of thermal and/or kinetic energy therefrom. This energy extraction causes the LP shaft 128 to rotate, which supports operation of the LP compressor 114 and/or rotation of the propeller shaft 130. The combustion gases 156 then exit the gas turbine engine 102 through the exhaust section 124 thereof. The combustion gases 156 mix with the first portion 142 of the air 140 to produce propulsive thrust.

Along with the turbo engine assembly 100, the gas turbine engine 102 serves a similar purpose and sees a similar environment in land-based gas turbines, and turbofan and turbojet engines in which the ratio of the first portion 142 of the air 140 to the second portion 144 of the air 140 is different. In each of the engines, a speed reduction device (e.g., the reduction gear 132) may be included between any shafts and spools. For example, the reduction gear 132 may be disposed between the LP shaft 128 and the propeller shaft 130.

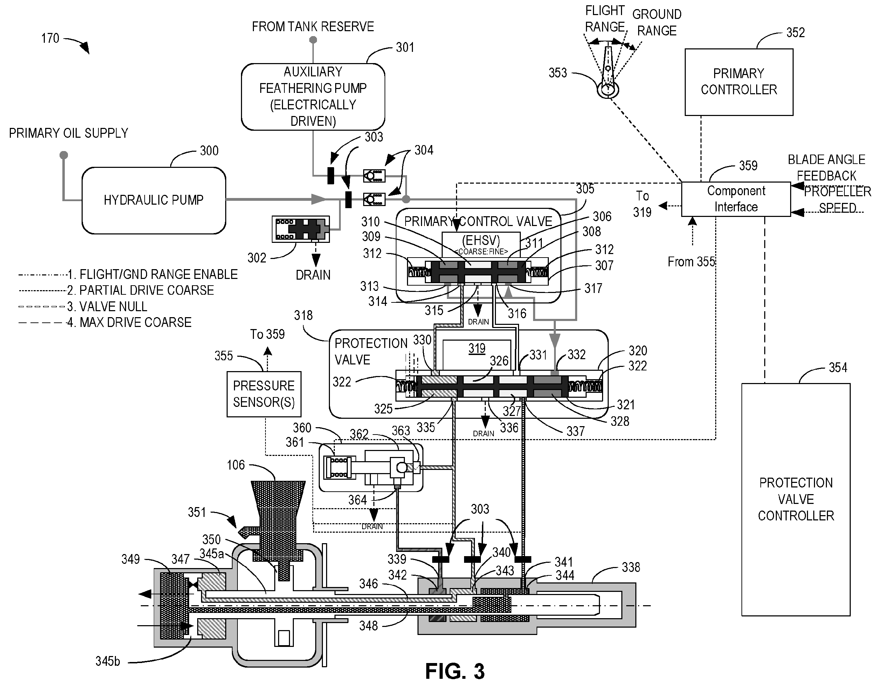

The turbo engine assembly 100 of FIG. 1A includes a pitch control protection system 170. The pitch control protection system 170 is a system that changes the pitch of the blades 106 in response to a trigger (e.g., instructions from a user or another controller), based on a measured pitch being different from an intended pitch, propeller speed, an error, a fault, instruction for a forbidden action (e.g., increase pitch to ground pitch angle when in flight), power or signal loss, etc.. The pitch control protection system 170 can automatically adjust the pitch of the blade 106 to reduce air drag automatically after a malfunction or error to reduce the hazard associated with the malfunction or error. The trigger may be one or more signals from a full authority digital engine control (FADEC) 180 and/or any other propeller controller (e.g., such as a propeller engine control (PEC)). In some examples, the propeller primary electronic control function could be housed in different units to provide additional segregation (e.g., for protecting against common mode failures that might result in loss of system function). In some examples, in response to a power outage or error, the FADEC 180 can be powered by a backup power supply and/or battery and output one or more control signals to the pitch control protection system 170 to cause the pitch control protection system 170 to change the pitch of the blades 106. The pitch control protection system 170 includes a hydraulic system with valves to pump hydraulic fluid into a valve assembly that adjusts the pitch of the blades 106. The pitch control protection system 170 is further described below in conjunction with FIGS. 3-8.

The FADEC 180 is a controller and/or computing system that controls aspects of engine performance. The FADEC 180 can detect and/or determine an error related to power failure, pressure low, propeller pitch control unit malfunction, and/or any other situations where automatic and/or passive adjustment of the pitch of the blades 106 is needed and/or desired. The FADEC 180 outputs one or more control signals to the pitch control protection system 170 to change the pitch of the blades 106 (e.g., between a fine pitch, a coarse pitch, a ground pitch, and a feathered pitch). In some examples, the FADEC 180 can utilize characteristics of the engine and/or flight and/or user/manufacturer preferences to determine what pitch angle to apply the blades 106. For example, the FADEC 180 can cause automatic feathering of the blades 106 based on a triggering event. For example, the FADEC 180 may trigger a first pitch angle (also referred to as a first pitch) for the blades 106 when an error occurs during takeoff or landing and may use a second pitch angle (also referred to as a second pitch) for the blades 106 when an error occurs during regular flight. Additionally, the FADEC 180 may control the speed of the adjustment of the pitch of the blades 106 based on characteristics of the engine and/or flight and/or user/manufacturer preferences.

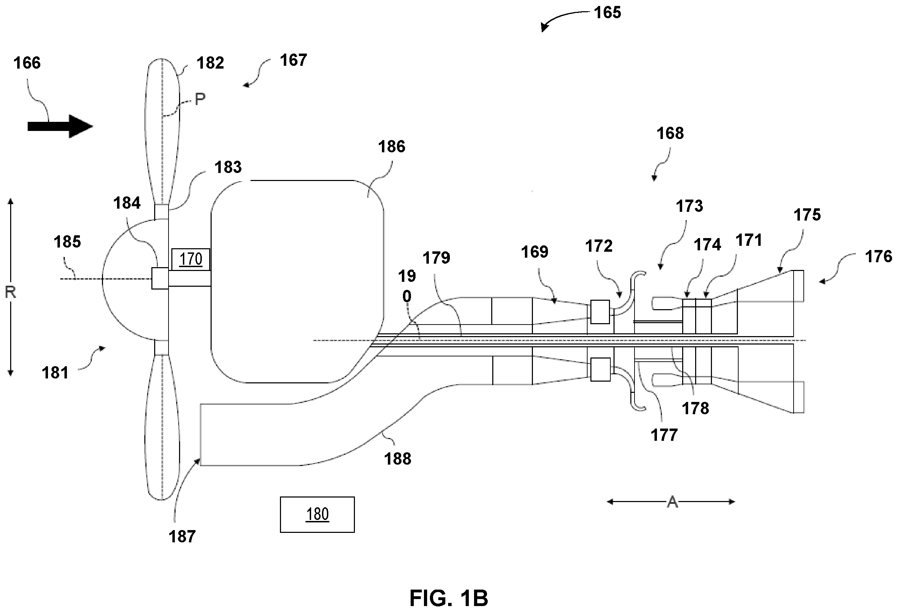

FIG. 1B is a schematic cross-sectional view of a gas turbine engine in accordance with examples disclosed herein. More particularly, for the embodiment of FIG. 1B, the gas turbine engine is a turboprop engine 165. As shown in FIG. 1B, the turboprop engine 165 defines an axial direction A (extending parallel to a longitudinal centerline or central axis 190 provided for reference), a radial direction R, and a circumferential direction C (not shown) disposed about the axial direction A. The turboprop engine 165 generally includes a propeller section 167 and a turbomachine 168 disposed aft of the propeller section 167 from an aircraft perspective, the propeller section 167 being operable with, and driven by, the turbomachine 168. The turboprop engine 165 includes the pitch control protection system 170 and the FADEC 180 of FIG. 1B.

The turbomachine 168 includes, in a serial flow relationship, a booster compressor 169, a high pressure (HP) compressor 172, a combustion section 173, a high pressure (HP) turbine 174, an intermediate pressure (IP) turbine 171, a low pressure (LP) turbine 175, and an exhaust section 176. An air flow path generally extends through the booster compressor 169, the HP compressor 172, the combustion section 173, the HP turbine 174, the IP turbine 171, the LP turbine 175, and the exhaust section 176 which are in fluid communication with each other.

In some examples, the HP turbine 174 can include at least two stages of HP turbine rotor blades. Such a configuration may ensure a sufficient amount of power is provided to the HP compressor 172.

An HP shaft or spool 177 drivingly connects the HP turbine 174 to the HP compressor 172. An IP shaft 178 drivingly connects the IP turbine 171 to the booster compressor 169. An LP shaft or spool 179 drivingly connects the LP turbine 175 to propeller section 167 of the turboprop engine 165. The turbomachine 168 includes a drive turbine drivingly coupled to a drive turbine shaft configured to provide an output torque to, e.g., the propeller section 167 in the embodiment shown. For the depicted example, the drive turbine is the LP turbine 175 and the drive turbine shaft is the LP shaft 179.

For depicted example, the propeller section 167 includes a variable pitch propeller 181 having a plurality of propeller blades 182 coupled to a disk 183 in a spaced apart manner. As depicted, the propeller blades 182 extend outwardly from the disk 183 generally along the radial direction R. Each propeller blade 182 is rotatable relative to the disk 183 about a pitch axis P by virtue of the propeller blades 182 being operatively coupled to a suitable actuation member 184 configured to collectively vary the pitch of the propeller blades 182, e.g., in unison. The propeller blades 182, the disk 183, and the actuation member 184 are together rotatable about a fan centerline 185 by LP shaft 179 across a power gear box 186. The power gear box 186 includes a plurality of gears for stepping down the rotational speed of the LP shaft 179 to a more efficient rotational fan speed and is attached to one or both of a core frame or a fan frame through one or more coupling systems. Additionally, for the embodiment shown, the power gear box 186 is an offset gear box, such that the fan axis 185 is offset from the longitudinal centerline 190 of the turbomachine 168.

During operation of the turboprop engine 165, a volume of air 166 (also referred to as a free stream flow of air prior to the volume of air 166 encountering the propeller 181) passes through the blades 182 of the propeller 181 and is urged toward an inlet 187 of turbomachine 168. More specifically, turboprop engine 165 includes an intake channel 188 that extends from the inlet 187, which is non-axisymmetric with respect to longitudinal centerline 190, to the booster compressor 169, where the channel 188 is axisymmetric with respect to longitudinal centerline 190.

The booster compressor 169 and the HP compressor 172 each include one or more sequential stages of compressor stator vanes, one or more sequential stages of compressor rotor blades, an impeller, or combinations thereof. In particular, the booster compressor 169 is depicted as an axial compressor (having multiple stages of compressor stator vanes and rotor blades) and the HP compressor 172 is depicted as a centrifugal compressor (having an impeller).

Though the illustrated embodiment includes both axial and centrifugal flow compressors, in some forms the turboprop engine 165 can include just an axial flow compressor(s) or centrifugal flow compressor(s).

The HP compressor 172 directs compressed air into the combustion section 173 where the air mixes with fuel. The combustion section 173 includes a combustor which combusts the air/fuel mixture to provide combustion gases. The combustion gases flow through the HP turbine 174, the IP turbine 171, and the LP turbine 175. Each of these HP, IP, and LP turbines 174, 171, 175 includes one or more sequential stages of turbine stator vanes and one or more sequential stages of turbine rotor blades. The turbine rotor blades are coupled to a respective one of the HP shaft 177, the IP shaft 178, or the LP shaft 179 to extract thermal and/or kinetic energy from the combustion gasses flowing therethrough. The energy extraction from the HP turbine 174 supports operation of the HP compressor 172 through the HP shaft 177, the energy extraction from the IP turbine 171 supports operation of the booster compressor 169 through the IP shaft 178, and the energy extraction from the LP turbine 175 supports operation of the propeller section 167 through the LP shaft 179 (across the power gear box 186). Combustion gases exit the turboprop engine 165 through the exhaust section 176.

In some examples, the turbine engine may include any suitable number of compressors, turbines, shafts, etc. For example, as will be appreciated, the HP shaft 177 and the LP shaft 179 may further be coupled to any suitable device for any suitable purpose. For example, the turboprop engine 165 of FIG. 1B may be utilized in aeroderivative applications. Additionally, the turboprop engine 165 may include any other suitable type of combustor, such as a reverse flow combustor.

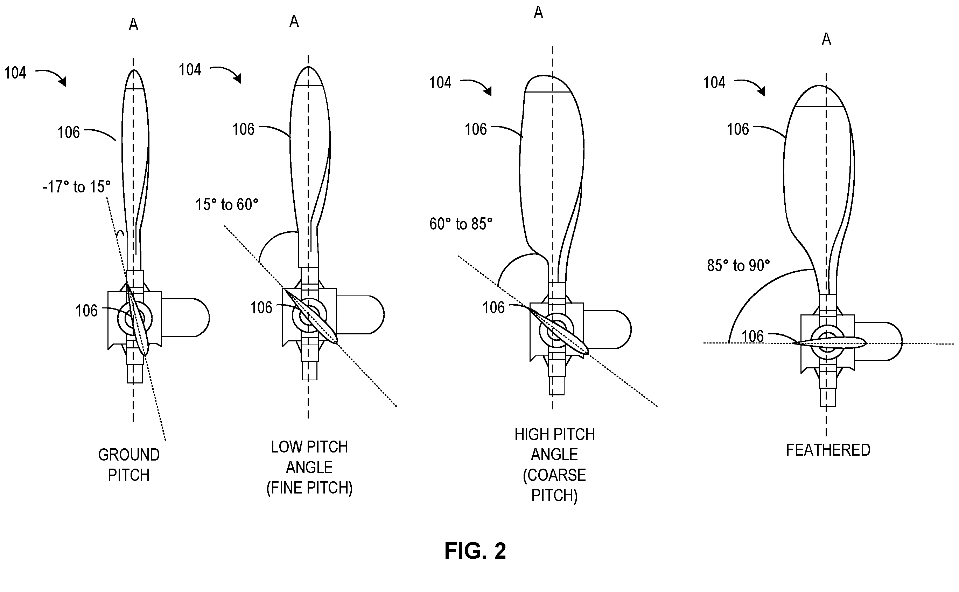

FIG. 2 includes side views of blades 106 of the propeller 104 of the turbo engine assembly 100 of FIG. 1A or the turboprop engine assembly 165 of FIG. 1B in four different pitch angles and/or positions (e.g., a ground pitch, fine pitch, coarse pitch, and feathered). In the example of FIG. 2, a ground angle of the blades 106, also referred to as ground pitch, is an angle that is less than a first threshold angle (e.g., less than 15 degrees) to the plane of rotation (e.g., corresponding to line A). A low pitch angle of the blades 106, also referred to as fine pitch, is an angle that is less than a second threshold (e.g., between 15 and 60 degrees) to the plane of rotation (e.g., corresponding to line A). The pitch with the low pitch angle corresponds to a first amount of drag (e.g., high drag). A high pitch angle of the blades 106, also referred to as coarse pitch, is an angle that is greater than the second threshold but less than a third threshold (e.g., between 60 and 85 degrees) to the plane of rotation. The pitch with the high pitch angle corresponds to a second amount of drag (e.g., medium drag). The feathered angle of the blades 106, also referred to as feathered pitch, is an angle that is above a threshold (e.g., 85-90 degrees to the plane of rotation). The pitch with the feathered angle corresponds to a third amount of drag (e.g., low drag). As described above, the pitch control protection system 170 can, based on a trigger, adjust the pitch to any angle. The amount of pitch control and/or speed of pitch control may be based on user/manufacturer preference and/or based on characteristics of the flight and/or turbo engine assembly 100. FIG. 2 illustrates example angles for different pitches corresponding to the blades 106 of turbo engine assembly 100 of FIG. 1A or the blades 182 of the turboprop engine assembly 165 of FIG. 1B. However, the angles may be different for different turbo propeller engines. For example, a turboprop engine assembly may define a ground pitch as a pitch between 12 and -17 degrees. Additionally, the angles may be different for propeller blades with different radius size.

FIG. 3 illustrates an example implementation of the pitch control protection system 170 of FIGS. 1A and 1B. The pitch control protection system 170 includes a hydraulic pump 300, an auxiliary hydraulic pump 301, a pressure relief valve 302, strainers 303, no return valves 304, and a primary control valve assembly 305 (also referred to as a servo valve or an electro-hydraulic servo valve (EHSV)). The primary control valve assembly 305 includes a valve spool position controller 306; a primary sleeve 307; a valve spool 308; passages 309, 310, 311 (also referred to as a first passage 309, a second passage 310, and a third passage 311); springs 312; inputs 313, 317 (also referred to as a first input 313 and a second input 317); and outputs 314, 315, 316 (also referred to as a first output 314, a second output 315, and a third output 316). The pitch control protection system 170 further includes a protection valve assembly 318 (also referred to as a servo valve or an electro-hydraulic servo valve (EHSV)). The protection valve assembly 318 includes a valve spool position controller 319; a sleeve 320; a valve spool 321; springs 322; passages 325, 326, 327, 328 (also referred to as a first passage 325, a second passage 326, a third passage 327, and a fourth passage 328); ports (e.g., inputs and/or outputs) 330, 331, 335, 337 (also referred to as a first port 330, a second port 331, a third port 335, and a fourth port 337); an input 332; and an output 336. The pitch control protection system 170 further includes a hydraulic fluid transfer unit 338. The hydraulic fluid transfer unit 338 is a dual acting hydraulic pitch actuator. The hydraulic fluid transfer unit 338 includes ports (e.g., inputs and/or outputs) 339, 340, 341 (also referred to as a first port 339, a second port 340, and a third port 341); galleries 342, 343, 344 (also referred to as a first gallery 342, a second gallery 343, and a third gallery 344); an example beta tube 345a, which includes a piston 345b and connections 346, 348 (also referred to as a fine pitch chamber connection 346 and a coarse pitch chamber connection 348); chambers 347, 349 of the propeller pitch change actuator on either side of the piston 345b (also referred to as a fine pitch chamber 347 and a coarse pitch chamber 349); a propeller crosshead 350; a counterweight 351; a primary controller 352; a protection valve controller 354; one or more pressure sensors 355; and component interface 359. The pitch control protection system 170 further includes a ground valve assembly 360, which includes a ground valve position controller 361, a solenoid valve 362, an input 363, and an output 364. As used herein, inputs may be referred to as inputs, inlets, ports, input connections, inlet connections, input terminals, inlet terminals, etc. As used herein, outputs may be referred to as ports, outputs, outlets, output connections, outlet connections, output terminals, outlet terminals, etc. Components that are connected via a solid line are connected via a connection, a tube, a hose, a pipe, and/or other device that can transport fluid. Components that are connected via a dashed line are connected via an electrical connection (e.g., a wired connection, such as a wire, an etch, etc. or a wireless connection). In FIG. 3, the valves/valve assemblies 302, 305, 318, the ground valve assembly 360, and the hydraulic fluid transfer unit 338 are illustrated as cross sections of the respective components. As used herein, an input refers to an input connection, inlet, or inlet connection and an output refers to an output connection, outlet, or output connection. Although FIG. 3 is described in conjunction with the turbo engine assembly 100 of FIG. 1A or the turboprop engine 165 of FIG. 1B, examples disclosed herein may be implemented in conjunction with another type of turbo engine assemblies, turbo propeller assemblies, hybrid engine assemblies, hybrid turboprop propeller assemblies, electric propulsion assemblies, etc. As used herein, a hybrid assembly is an assembly with a propeller drive by an electric motor in a conventional gas turbine engine.

The hydraulic pump 300 of FIG. 3 is a conveyer of hydraulic power that pumps a hydraulic fluid. The hydraulic pump 300 acts as a pressure vessel to cause hydraulic fluid to flow (e.g., to be pumped) into the primary control valve assembly 305 and/or the protection valve assembly 318. The hydraulic fluid may be an oil-based fluid, a silicone-based fluid, a synthetic hydrocarbon-based fluid, and/or another type of hydraulic fluid.

The auxiliary hydraulic pump 301 of FIG. 3 is a conveyer of hydraulic power that pumps a hydraulic fluid when the hydraulic fluid from the hydraulic pump 300 is insufficient (e.g., due to a loss of primary oil supply). One or both of the hydraulic pumps 300, 301 cause(s) hydraulic fluid to flow (e.g., to be pumped) into the primary control valve assembly 305 and/or the protection valve assembly 318. The hydraulic fluid may be an oil-based fluid, a silicone-based fluid, a synthetic hydrocarbon-based fluid, and/or another type of hydraulic fluid.

The pressure relief valve 302 of FIG. 3 keeps the pressure of the hydraulic fluid from the hydraulic pump 300 below a threshold level (e.g., 1100 pounds per square inch (psi), etc.) by draining some of the hydraulic fluid toward a drain when the hydraulic fluid is above the threshold level. The pressure relief valve 302 reduces the pressure of the hydraulic fluid to prevent pressure-induced damage when causing the hydraulic fluid to flow into other components of the pitch control protection system 170. In some examples, the pressure relief valve 302 is implemented within the hydraulic pump 300.

The strainers 303 of FIG. 3 strain the hydraulic fluid to block contaminants in the hydraulic fluid that may damage or jam the valves 304, 305, 318. Although FIG. 3 has five strainers 303, there may be any number of strainers. The no return valves (NRVs) 304 are valves that prevent hydraulic fluid from returning back to the hydraulic pumps 300, 301.

The primary control valve assembly 305 of FIG. 3 allows or prevents hydraulic fluid from the hydraulic pumps 300, 301 into the coarse pitch chamber 349 and the fine pitch chamber 347 via one or more of the connections 346, 348 of the beta tube 345a based on a position of the valve spool 308. The primary control valve assembly 305 includes the valve spool position controller 306. The valve spool position controller 306 obtains an electrical signal (e.g., a current) from the primary controller 352. The valve spool position controller 306 moves the valve spool 308 based on the electrical signal (e.g., based on the amount of current). For example, the valve spool position controller 306 moves the valve spool 308 to a first position based on obtaining a first current and moves the valve spool 308 to a second position based on a second current. In some examples, the valve spool position controller 306 may be a direct drive valve (also referred to as a proportional valve). In such examples, the valve spool 308 is moved by an electric means (e.g., a linear motor, a stepper type motor, etc. through a gear drive with electronic feedback). As further described below, the primary controller 352 generates the signal based on instructions from a pilot and/or based on instructions from one or more of the FADEC 180 of FIGS. 1A and 1B, a separate controller (e.g., a propeller electronic controller), a separate control box, etc.

The primary sleeve 307 of FIG. 3 is a cylindrical valve that includes the valve spool 308. The valve spool 308 is a cylindrical valve spool that fits within the primary sleeve 307 and includes solid portions and open portions (also referred to as open areas). The open portions of the valve spool 308 make up the passages 309, 310, 311. The passages 309, 310, 311 are separated so that any fluid in one passage cannot directly flow into another passage within the primary sleeve 307. The valve spool 308 can move within a cavity of the primary sleeve 307 between the springs 312. In some positions (e.g., locations), one or more solid portions of the valve spool 308 can block or plug one or more of the inputs 313, 317 or the outputs 314, 315, 316. In other positions, one or more of the solid portions of the valve spool 308 do not block or plug one or more of the inputs 313, 317 or the outputs 314, 315, 316, allowing the hydraulic fluid to flow into and/or out of one or more of the passages 309, 310, 311.

The first input 313 of the primary sleeve 307 is connected to the hydraulic pumps 300, 301 (e.g., via the strainers 303 and the NRVs 304), the second input 317, and the input 332 of the sleeve 320 of the protection valve assembly 318. The first output 314 is connected to the first port 330 of the sleeve 320. The second output 315 is connected to a drain. The third output 316 is connected to the second port 331 of the sleeve 320. The second input 317 is connected to the hydraulic pumps 300, 301 (e.g., via the strainers 303 and the NRVs 304), the first input 313, and the input 332 of the sleeve 320.

When the valve spool 308 is in the position of FIG. 3, the first and third outputs 314, 316 are blocked by the valve spool 308. Accordingly, the primary sleeve 307 does not output hydraulic fluid to either the fine pitch chamber 347 or the coarse pitch chamber 349.

When the valve spool 308 is moved forward in the orientation of FIG. 3, the first output 314 of the primary sleeve 307 opens into the second passage 310 and the second passage 310 opens to a drain via the second output 315 of the primary sleeve 307. Thus, no hydraulic fluid is pumped from the first output 314 to the sleeve 320. As described above, the term "forward" refers to a direction along the centerline axis 108 in the direction of movement of the turbo engine assembly 100, such as to the left in FIG. 3, while the term "rearward" refers to a direction along the centerline axis 108 in the opposite direction, such as to the right in FIG. 3. Additionally, when the valve spool 308 is moved forward in the orientation of FIG. 3, the second input 317 of the primary sleeve 307 opens into the third passage 311 and the third passage 311 opens into the second port 331 of the sleeve 320 via the third output 316 of the sleeve 320. Thus, the hydraulic fluid from the hydraulic pump(s) 300, 301 is pumped into the second port 331 of the sleeve 320 via the second input 317 of the primary sleeve 307 and the third passage 311.

When the valve spool 308 is moved rearward in the orientation of FIG. 3, the third output 316 of the primary sleeve 307 opens into the second passage 310 and the second passage 310 opens to a drain via the third output 316 of the primary sleeve 307. Thus, no hydraulic fluid is pumped from the third output 316 to the sleeve 320. Additionally, when the valve spool 308 is moved rearward in the orientation of FIG. 3, the first input 313 of the primary sleeve 307 opens into the first passage 309 and the first passage 309 opens into the first port 330 of the sleeve 320 via the first output 314 of the primary sleeve 307. Thus, the hydraulic fluid from the hydraulic pump(s) 300, 301 is pumped into the first port 330 of the sleeve 320 via the first input 313 of the primary sleeve 307 and the first passage 309.

The springs 312 of FIG. 3 are structured to position the valve spool 308 in a particular position when the valve spool position controller 306 does not obtain a signal. In this manner, when there is a loss of signal or power, the springs 312 cause the valve spool 308 to move to a pre-selected position. In the example of FIG. 3, the springs 312 are structured to move the valve spool 308 to the position illustrated in FIG. 3, where the valve spool 308 plugs the first and third outputs 314, 316. In some examples, one or more of the springs 312 may be removed. For example, the spring 312 on the left (with regards to the orientation of FIG. 3) of the sleeve 320 may be removed. Removing the spring 312 on the left provides greater chip-shearing capability in the desired direction. If there is no oil pressure in the first stage of the valve assembly 318, the spring 312 on the right (with regards to the orientation of FIG. 3) of the sleeve 320 ensures the spool 321 moves to connect fine pitch oil connected to drain, thereby allowing the counterweights 351 to drive the blade 106 coarse, as a failsafe.

The protection valve assembly 318 of FIG. 3 allows or prevents hydraulic fluid from the primary sleeve 307 and/or the hydraulic pumps 300, 301 into the coarse pitch chamber 349 and the fine pitch chambers 347 of the beta tube 345a based on a position of the valve spool 321. The primary control valve assembly 305 includes the valve spool position controller 319 to obtain an electrical signal (e.g., a current) from the protection valve controller 354 via component interface 359. The valve spool position controller 319 moves the valve spool 321 based on the electrical signal (e.g., based on the amount of current). For example, the valve spool position controller 319 moves the valve spool 321 to a first position based on obtaining a first current, moves the valve spool 321 to a second position based on a second current, etc. In some examples, the valve spool position controller 319 may be a direct drive valve (also referred to as a proportional valve). In such examples, the valve spool 321 is moved by an electric means (e.g., a linear motor, a stepper type motor, etc. through a gear drive with electronic feedback). As further described below, the protection valve controller 354 generates the signal based on various data (e.g., propeller speed, pressure sensor data, blade angle feedback, information from the primary controller 352, etc.).

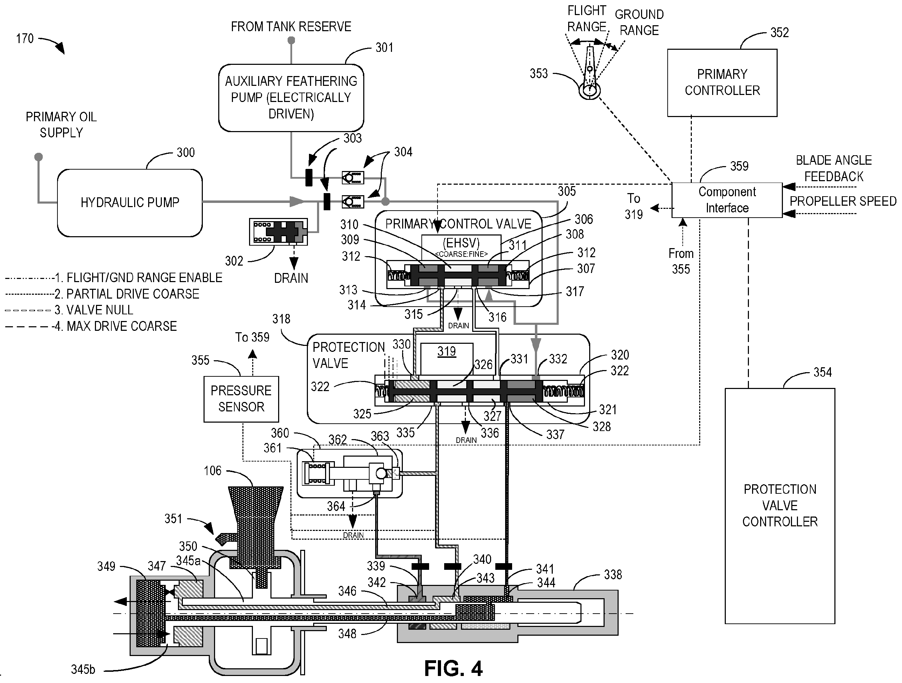

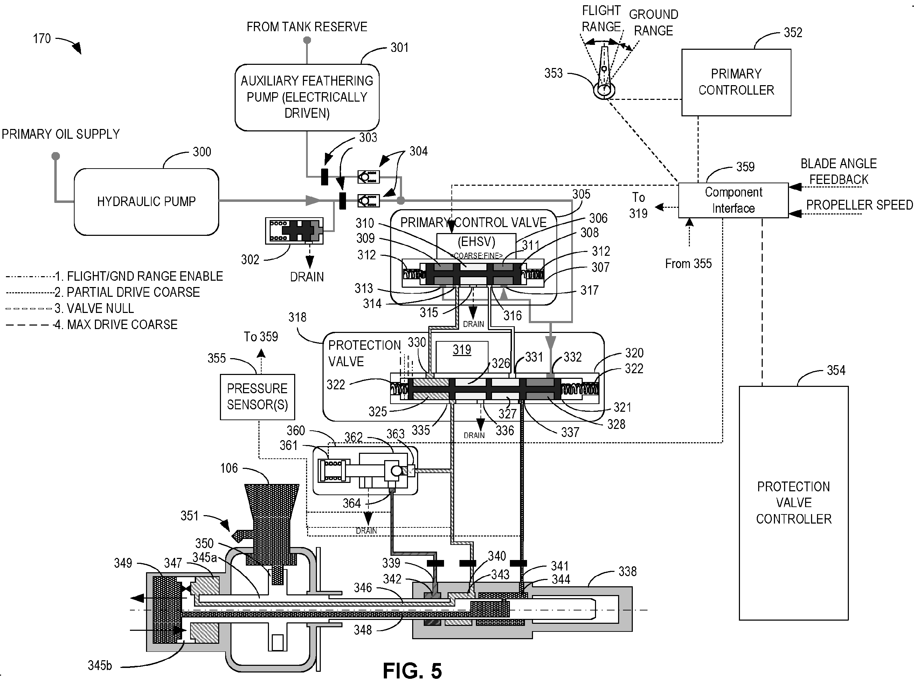

The valve spool 321 of FIG. 3 is a cylindrical valve spool that fits within the cylindrical sleeve 320 and includes solid portions and open portions. The open portions of the valve spool 321 define (e.g., make up, correspond to, etc.) the passages 325, 326, 327, 328. The passages 325, 326, 327, 328 are separated so that any fluid in one passage cannot directly flow into another passage within the sleeve 320. The valve spool 321 can move within a cavity of the sleeve 320 between the springs 322. In some positions (e.g., locations), one or more solid portions of the valve spool 321 can block or plug one or more of the ports (e.g., inputs) 330, 331, 332 or ports (e.g., outputs) 335, 336, 337. In other positions, one or more of the solid portions of the valve spool 321 do not block or plug one or more of the ports 330, 331, 335, 337, the input 332, or the output 336 allowing the hydraulic fluid to flow into and/or out of one or more of the passages 325, 326, 327, 328. In some examples, one or more of the ports 330, 331, 335, 337 can be bi-directional (e.g., to allow hydraulic fluid to pass through the protection valve assembly 318 in either direction). For example, based on the position of the valve spool 321, the third port 335 provides for bidirectional flow in the examples of FIGS. 3, 7, 8, and 9, provides for single direction flow in the examples of FIGS. 4, 6, and 10, and does not provide flow in the example of FIG. 5.

The first port 330 of FIG. 3 of the sleeve 320 is connected to the first output 314 of the primary sleeve 307. The second port 331 is connected to the third output 316 of the primary sleeve 307. The input 332 is connected to the hydraulic pumps 300, 301 (e.g., via the strainers 303, and the NRV 304 and the first input 313 and the second input 317 of the primary sleeve 307. The third port 335 is connected to the second port 340 of the hydraulic fluid transfer unit 338. The output 336 is connected to the drain. The fourth port 337 is connected to the third port 341 of the hydraulic fluid transfer unit 338.

The valve spool position controller 319 of FIG. 3 can move the valve spool 321 into at least five different positions that correspond to five different actions based on a signal from the protection valve controller 354 via the component interface 359. For example, the valve spool 321 can be moved to a maximum drive coarse position, a partial drive coarse position, a valve null position, a flight range position, and a ground range enabled position. The maximum drive coarse position corresponds to an automatic flow of hydraulic fluid at full pressure to the coarse pitch chamber 349 of the valve spool assembly to cause the blade 106 to move to a coarse and/or feathered pitch angle at a maximum rate. The partial drive coarse position corresponds to an automatic flow of hydraulic fluid at partial pressure to the coarse pitch chamber 349 of the valve spool assembly to cause the blade 106 to move to a coarse and/or feathered pitch angle at a rate less than maximum. The valve null position corresponds to preventing hydraulic fluid from flowing to either the coarse pitch chamber 349 or the fine pitch chamber 347, maintaining the pitch of the blade 106. The flight/ground range position corresponds to control of the pitch angle based on the fluid output by the primary sleeve 307 and/or control of the pitch angle to the ground range (e.g., when the ground valve assembly 360 is open). The ground range enabled position corresponds to pumping hydraulic fluid into the fine pitch chamber 347 to cause the blade 106 to move to a ground pitch angle. The example of FIG. 3 is described in conjunction with the flight/ground range position. However, each position is illustrated in one of FIGS. 4-7.

In FIG. 3, the valve spool 321 is in the flight/ground range position. In the flight/ground range position, the first port 330 opens to the first passage 325 and the third passage opens to the third port 335. Thus, hydraulic fluid from the first port 330 is pumped out of the third port 335. The second port 331 opens to the third passage 327 and the third passage 327 opens to the fourth port 337. Thus, hydraulic fluid from the second port 331 is pumped out of the fourth port 337. The input 332 opens to the fourth passage 328 (which does not open to an output). The second passage 326 opens to the output 336 and the output 336 opens to the drain. Thus, any fluid in the second passage 326 is drained to the drain (e.g., hydraulic fluid from the fine pitch chamber 347 if the piston 345b is forced rearward or hydraulic fluid from the coarse pitch chamber 349 if the piston 345b is forced forward). Accordingly, in the flight/ground range position, hydraulic fluid from either the first output 314 and/or third output 316 of the primary sleeve 307 is pumped into the hydraulic fluid transfer unit 338.

The springs 322 of FIG. 3 are structured to position the valve spool 321 in the partial drive coarse position when the valve spool position controller 319 does not obtain a signal. In this manner, when there is a loss of signal or power, the springs 322 cause the valve spool 321 to move to the partial drive coarse position. Because a coarse pitch angle is safer than a fine pitch angle in flight, the springs 322 can be structured to position the valve spool 321 into the partial drive coarse position. In some examples, one or more of the springs 322 may be removed. For example, the spring 322 on the left (with regards to the orientation of FIG. 3) of the sleeve 320 may be removed. Removing the spring 322 on the left provides greater chip-shearing capability in the desired direction. If there is no oil pressure in the first stage of the valve assembly 318, the spring 322 on the right (with regards to the orientation of FIG. 3) of the sleeve 320 ensures the spool 321 moves to connect fine pitch oil connected to drain, thereby allowing the counterweights 351 to drive the blade 106 coarse, as a failsafe.

Although the example of FIGS. 3-7 provide a particular structure for implementing the valve assembly 318, there may be other ways to implement the valve assembly 318 to perform the same and/or substantially similar functionality.

The hydraulic fluid transfer unit 338 of FIG. 3 houses the beta tube 345a and components structured to move the beta tube 345a into different positions. In some examples, the hydraulic fluid transfer unit 338 may be combined with and/or directly attached to one or more components of the pitch control protection system 170. As further described below, as the beta tube 345a moves, the pitch angle of the blade 106 changes. The hydraulic fluid transfer unit 338 includes the ports 339, 340, 341. The first port 339 is connected to the output 364 of the ground valve assembly 360 and the first gallery 342. The second port 340 is connected to the third port 335 of the sleeve 320 and the second gallery 343 and the input 363 of the ground valve assembly 360. The third port 341 is connected to the fourth port 337 of the sleeve 320 and the third gallery 344. The galleries 342, 343, 344 may be a 360-degree open space that connects the ports 339, 340, 341 to the chambers 347, 349 via one or more of the fine pitch chamber connection 346 or the coarse pitch chamber connection 348. Accordingly, the galleries 342, 343, 344 convey hydraulic fluid from one location to another. For example, hydraulic fluid pumped into the first gallery 342 can be pumped into the fine pitch chamber 347 when the beta tube 345a is in a position where the first gallery 342 opens to the fine pitch chamber connection 346. Additionally, hydraulic fluid pumped into the second gallery 343 can be pumped into the fine pitch chamber 347 when the beta tube 345a is in a position where the second gallery 343 opens to the fine pitch chamber connection 346. Additionally, hydraulic fluid pumped into the third gallery 344 can be pumped into the coarse pitch chamber 349 when the beta tube 345a is in a position where the third gallery 344 opens to the coarse pitch chamber connection 348. When the beta tube 345a rotates, hydraulic fluid can still be pumped in, because regardless of the orientation of the connections 346, 348, the 360-degree galleries 342, 343, 344 can open up to the connections 346, 348.

The connections 346, 348 of FIG. 3 are tubes, pipes, hoses, and/or openings within the beta tube 345a that can pump obtained hydraulic fluid from the sleeve 320 into one or more of the fine pitch chamber 347 and the coarse pitch chamber 349. When hydraulic fluid is pumped into the coarse pitch chamber 349, the beta tube 345a moves rearward in the orientation of FIG. 3, causing the blade 106 to move to a coarse pitch angle. When the hydraulic fluid is pumped into the fine pitch chamber 347, the beta tube 345a moves forward in the orientation of FIG. 3, causing the blade 106 to move to a fine pitch angle. The coarse pitch chamber 349 and the fine pitch chamber 347 may include a piston bleed structure to bleed out hydraulic fluid that has been pumped into the respective chambers 347, 349. The beta tube 345a includes the piston 345b to separate the chambers 347, 349. When hydraulic fluid is pumped into the fine pitch chamber 347, the piston 345b is moved forward and hydraulic fluid in the coarse pitch chamber 349 is pumped out of one or more of the drain outputs 315, 336 via the primary control valve 305 and/or the protection valve 318 (e.g., depending on the positions of the valve spools 308, 321). When hydraulic fluid is pumped into the coarse pitch chamber 349, the piston 345b is moved rearward and hydraulic fluid in the fine pitch chamber 347 is pumped out of one or more of the drain outputs 315, 336 via the primary control valve 305 and/or the protection valve 318 (e.g., depending on the positions of the valve spools 308, 321).

The beta tube 345a of FIG. 3 includes a propeller crosshead 350 that transfers the lateral movement (e.g., forward and rearward in the orientation of FIG. 3) into rotational movement to adjust the pitch of the blade 106. The yoke arrangement of the propeller crosshead 350 locates the operating pin on the base of each propeller blade 106. The pin may be offset from the centerline of the propeller blade 106 such that axial movement of the pitch beta tube 345a results in rotation of the blade 106.

The blade 106 of FIG. 3 includes the counterweight 351. The counterweight 351 causes the blade 106 to naturally reduce pitch when a load is present on the blade 106. The counterweight 351 causes the blade 106 to naturally position to a higher blade angle. As further described below, one or more of the pressure sensor(s) 355 can measure pressure at the ports 364, 335, 337 so that the protection valve controller 354 can determine, based on the pressure measurement, when there is any friction in the blade 106 that prevents the counterweight 351 from naturally reducing pitch of the blade 106 and/or determine that the counterweight 351 has been compromised.

The primary controller 352 of FIG. 3 is a pitch controller that outputs a control signal to the valve spool position controller 306 via the component interface 359 based on instructions from a pilot and/or autopilot instructions. For example, when a pilot engages the power lever 353, the primary controller 352 can determine a pitch angle that corresponds to the control of the power lever 353 and adjust the pitch of the blade 106 by sending a signal (e.g., a current) to the valve spool position controller 306 via the component interface 359. The primary controller 352 can execute control algorithm(s) to determine an amount to change the pitch angle at a given time. For example, in flight, the propeller controller 352 varies pitch to maintain propeller speed. Varying the pitch in flight changes the propeller torque absorbed. If the propeller torque is greater than the engine torque, the propeller speed will be reduced. If the propeller torque is less than the engine torque, the propeller speed will increase. The control algorithm(s) executed by the primary controller 352 provide for stability with respect to the propeller speed. When the propeller is in the ground range, the control algorithm sets the pitch as a function of the position of the power lever 353 while the engine maintains speed. As described above, the valve spool position controller 306 controls the position of the valve spool 308 in the primary sleeve 307 based on the signal, which causes hydraulic fluid to be pumped into one of the fine pitch chamber 347 or the coarse pitch chamber 349 to adjust the pitch of the blade 106. The primary controller 352 may output the desired pitch position, flight mode (e.g., grounded, take-off, landing, cruise altitude, etc.), and/or other information to the protection valve controller 354 via the component interface 359. In some examples, the primary controller 352 may be in communication with and/or implemented within the FADEC 180 of FIGS. 1A and 1B.

The protection valve controller 354 of FIG. 3 outputs control signals to the protection valve assembly 318 via the component interface 359 to facilitate and/or override operation of the primary sleeve 307. For example, during default operation, the protection valve controller 354 outputs a signal to the valve spool position controller 319 via the component interface 359 to cause the valve spool 321 of the sleeve 320 to be positioned in the flight range location. As described above, when the valve spool 321 is in the flight range location, the position of the valve spool 308 of the primary sleeve 307 controls the position of the beta tube 345a by pumping hydraulic fluid into the fine pitch chamber 347 and/or the coarse pitch chamber 349. The protection valve controller 354 also monitors the propeller speed, blade angle feedback, pressure information, and/or information from the primary controller 352 to determine whether to override the control of the primary control valve assembly 305 and/or otherwise control the pitch of the blade 106. For example, when the propeller speed is above one or more thresholds, the protection valve controller 354 can adjust the position of the valve spool 321 to cause the blade 106 to adjust the tilt to decrease the pitch angle to a coarser pitch angle by pumping hydraulic fluid into the coarse pitch chamber 349. Additionally, when blade pitch angle feedback indicates that the blade 106 is not approaching the intended pitch angle, the protection valve controller 354 can adjust the position of the valve spool 321 to attempt to move the blade 106 to the intended pitch angle. Additionally, the protection valve controller 354 can prevent the blade 106 from reaching a pitch angle below a threshold (e.g., a ground pitch) unless the aircraft is grounded.

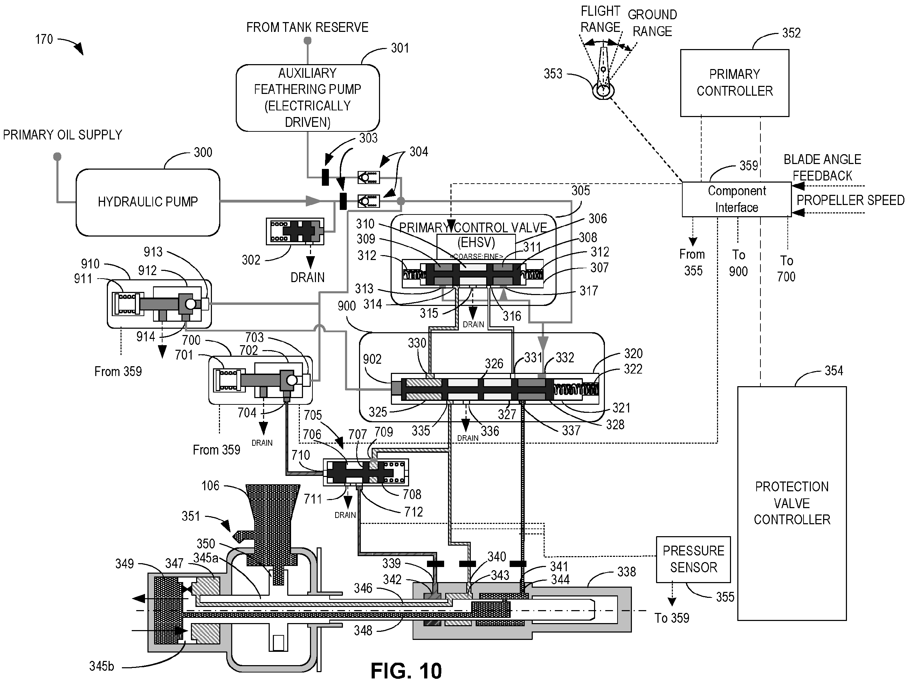

In some examples, the protection valve controller 354 determines and/or alerts, via the component interface 359, the pilot or another component to an issue associated with the pressure measured by the pressure sensor 355. In some examples, the pressure sensor 355 can measure a pressure at the output 364 that can be used to determine a valve failure, excess friction at the propeller crosshead 350, and/or an issue with the counterweight 351. In some examples, the pressure sensor(s) 355 can measure a pressure at the third and fourth ports 335, 337. In such examples, the protection valve controller 354 can determine a delta (e.g., difference) between the pressure at the third port 335 and the pressure at the fourth port 337. The protection valve controller 354 can determine in flight system friction based on the delta and take appropriate action based on the flight system friction. The protection valve controller 354 may monitor the pressure as the pitch of the blade 106 is reduced to determine an amount of pressure needed to overcome friction. When the amount of pressure needed to overcome friction changes, the protection valve controller 354 can flag, via the component interface 359, the potential issue to the pilot, a mechanic, etc. For example, because the pressure at the output 364 is supposed to be zero when the aircraft is in flight, the protection valve controller 354 can generate an alert when the pressure at the output 364 is not zero at any time during flight. The protection valve controller 354 is further described below in conjunction with FIG. 10.

The ground valve assembly 360 of FIG. 3, when opened/enabled, pumps hydraulic fluid into the fine pitch chamber 347 via the first gallery 342 to control the position of a valve spool of the solenoid valve 362 (also referred to as a ground beta enabled (GBE solenoid)) to cause the blade 106 to move to the ground pitch angle. The ground valve assembly 360 includes the ground valve position controller 361 to control the solenoid valve 362 to pump out hydraulic fluid from the output 364 when open or block hydraulic fluid from being pumped from the output 364 when closed. The ground valve position controller 361 obtains a control signal from the protection valve controller 354 via the component interface 359. The control signal may be a first or second amount of current. For example, if no current is applied to the ground valve position controller 361, the ground valve position controller 361 disables/closes the solenoid valve 362 of the ground valve assembly 360 to close, thereby blocking any hydraulic fluid from being output at the output 364. When a threshold amount of current is applied to the ground valve position controller 361, the ground valve position controller 361 moves a valve spool of the solenoid valve 362 to an open position (e.g., enable the solenoid valve 362), pumping the hydraulic fluid from the input 363 toward the output 364 and into the first gallery 342. The protection valve controller 354 only causes the ground valve assembly 360 to open when the aircraft is grounded. Accordingly, when in flight, the protection valve controller 354 closes (e.g., disables) the ground valve assembly 360 to prevent hydraulic fluid from entering the first gallery 342. Thus, the beta tube 345a is structurally disabled from moving the blade 106 into a ground pitch angle. However, when grounded, the protection valve controller 354 can cause the solenoid valve 362 to pump hydraulic fluid into the fine pitch chamber 347 via the first gallery 342 to further move the beta tube 345a into a ground pitch angle.

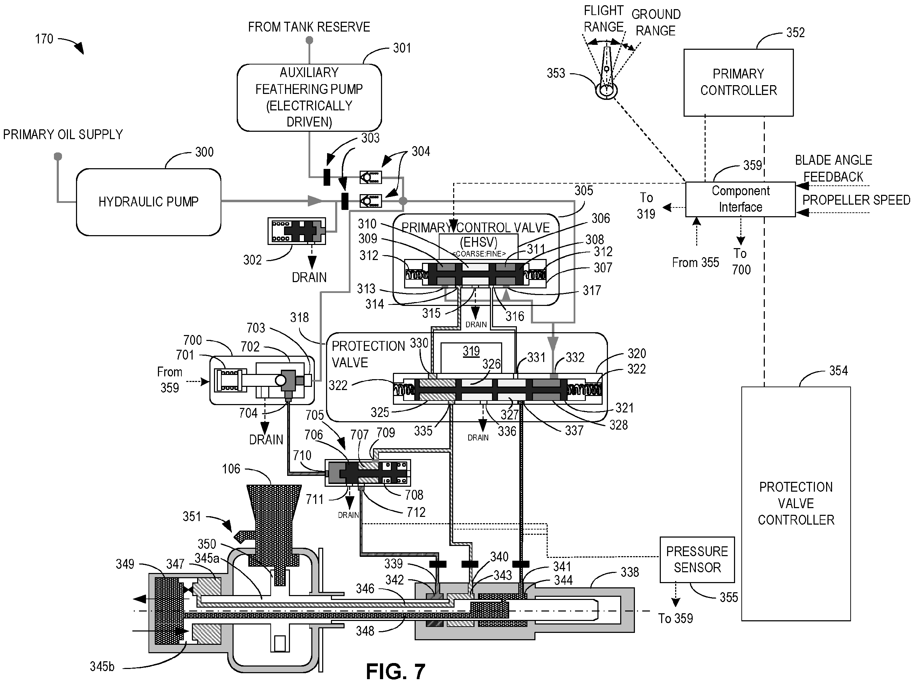

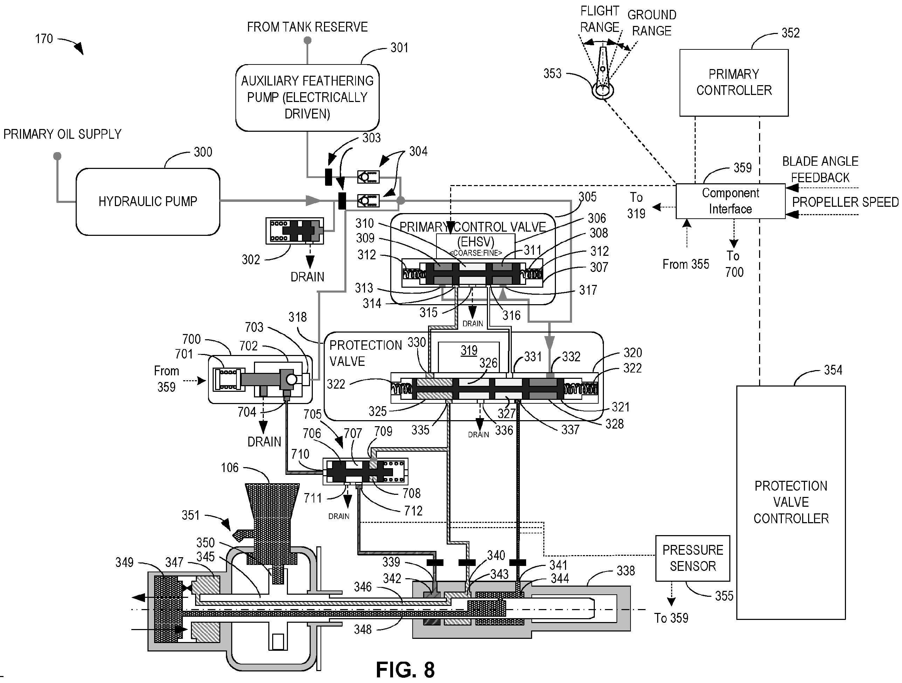

Although the ground valve assembly 360 opens or closes to enable or disable the ability to move the blade 106 to a ground pitch based on instructions from the protection valve controller 354 via the component interface 359, in some systems, the pressure and/or amount of hydraulic fluid flow through the solenoid-based ground valve assembly 360 may not be high enough to move the beta tube 345a (or move the beta tube 345a within a threshold amount of time) to a position corresponding to a ground pitch angle. Thus, a two-valve implementation may be used where a solenoid-based valve controls a second valve that is capable of pumping hydraulic fluid with more pressure and/or flow. An example of a two-valve implementation is further described below in conjunction with FIGS. 7 and 8.

FIG. 4 illustrates an example implementation of the pitch control protection system 170 of FIGS. 1A and 1B when the valve spool 321 of the sleeve 320 is in a partial drive coarse position.

In the partial drive coarse position of FIG. 4, the first port 330 opens to the first passage 325 (which does not open to an output). The second port 331 opens to the third passage 327 (which does not open to an output). The input 332 opens to the fourth passage 328 and the fourth passage 328 partially opens to the fourth port 337. For example, the valve spool 321 partially blocks the fourth port 337, limiting the amount of hydraulic fluid that is pumped into the hydraulic fluid transfer unit 338. The hydraulic fluid from at least one of the hydraulic pumps 300, 301 is pumped into the third gallery 344 of the hydraulic fluid transfer unit 338 via the third port 341 without going through the primary sleeve 307. Accordingly, in the partial drive coarse position of FIG. 4, the protection valve assembly 318 overrides the pitch control of the primary control valve assembly 305 by blocking the first and third outputs 314, 316 of the primary sleeve 307. The second passage 326 opens to the third port 335 and the second output 336. Thus, any fluid in the second passage 326 is drained to the drain. For example, as hydraulic fluid is pumped into the coarse pitch chamber 349, causing the piston 345b to move rearward, the hydraulic fluid in the fine pitch chamber 347 is forced into the drain output 336 of the second passage 326 (e.g., via the fine pitch connection chamber 346, the second gallery 343, and the ports 340, 335).

FIG. 5 illustrates an example implementation of the pitch control protection system 170 of FIGS. 1A and 1B when the valve spool 321 of the sleeve 320 is in a valve null position.

In the valve null position of FIG. 5, the first port 330 opens to the first passage 325 (which does not open to an output). The second port 331 opens to the third passage 327 (which does not open to an output). The input 332 opens to the fourth passage 328 (which does not open to an output). The second passage 326 opens to the output 336 and the output 336 opens to the drain. Additionally, in the valve null position, the third port 335 and the fourth port 337 are plugged and/or blocked by the valve spool 321. Accordingly, no hydraulic fluid from the sleeve 320 flows into the hydraulic fluid transfer unit 338. For example, the sleeve 320 blocks the fluid output by the primary sleeve 307 from the hydraulic fluid transfer unit 338. Thus, in the valve null position, hydraulic fluid is not used to adjust the pitch of the blade 106 (e.g., pitch angle is maintained and/or controlled by the counterweight 351).

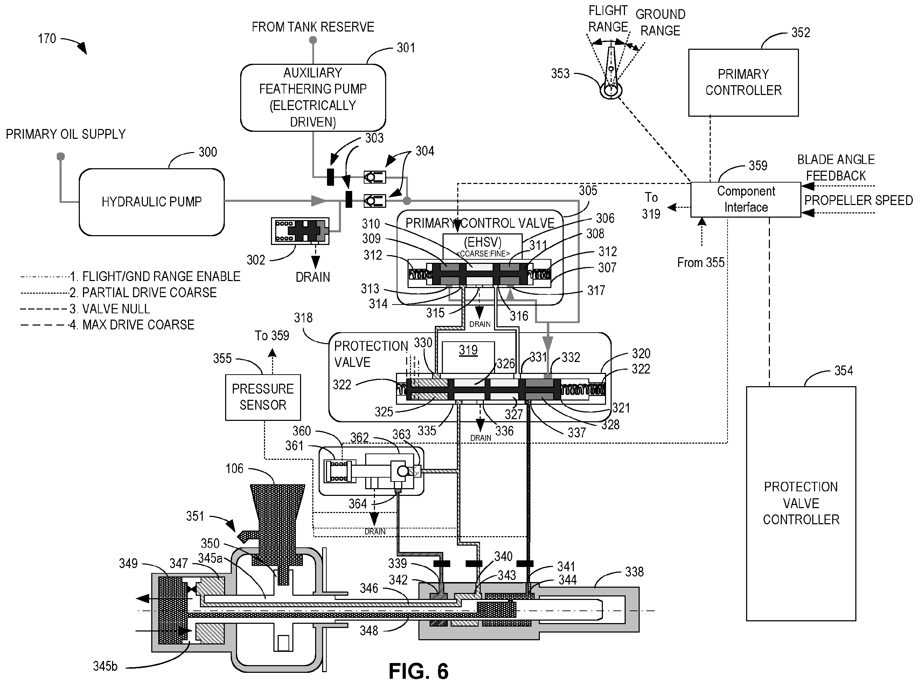

FIG. 6 illustrates an example implementation of the pitch control protection system 170 of FIGS. 1A and 1B when the valve spool 321 of the sleeve 320 is in a maximum drive coarse position.

In the maximum drive coarse position of FIG. 6, the first port 330 opens to the first passage 325 (which does not open to an output). The second port 331 opens to the third passage 327 (which does not open to an output). The input 332 opens to the fourth passage 328 and the fourth passage 328 fully opens to the fourth port 337. For example, the valve spool 321 does not block the fourth port 337, allowing maximum hydraulic flow into the hydraulic fluid transfer unit 338. The hydraulic fluid from at least one of the hydraulic pumps 300, 301 is pumped into the third gallery 344 of the hydraulic fluid transfer unit 338 via the third port 341 without going through the primary sleeve 307. Accordingly, in the maximum drive coarse position of FIG. 6, the protection valve assembly 318 overrides the pitch control of the primary control valve assembly 305 by blocking the hydraulic fluid output by the primary sleeve 307. Additionally, in the maximum drive coarse position of FIG. 6, the second passage 326 opens to the third port 335 and the output 336 and the output 336 opens to the drain. For example, as hydraulic fluid is pumped into the coarse pitch chamber 349, causing the piston 345b to move rearward, the hydraulic fluid in the fine pitch chamber 347 is forced into the drain output 336 of the second passage 326 (e.g., via the fine pitch connection chamber 346, the second gallery 343, and the ports 340, 335).

FIG. 7 illustrates an alternative example implementation of the pitch control protection system 170 of FIGS. 1A and 1B. FIG. 7 replaces the single solenoid-based ground valve assembly 360 of FIGS. 3-6 with an example first ground valve assembly 700 and a second ground valve assembly 705. The first ground valve assembly 700 includes an example valve position controller 701, an example solenoid valve 702, an example input 703, and an example output 704. The second ground valve assembly 705 includes an example valve spool 706; example passages 707, 708 (also referred to as a first passage 707 and a second passage 708); example inputs 709, 710 (also referred to as a first input 709 and a second input 710); and example outputs 711, 712 (also referred to as a s first output 711 and a second output 712).

The first ground valve assembly 700 of FIG. 7 includes the input 703 connected to the hydraulic pumps 300, 301 via the strainers 303 and the NRVs 304. The first ground valve assembly 700 further includes the output 704 connected to the second input 710 of the second ground valve assembly 705. Additionally, the ground valve position controller 701 is connected to the protection valve controller 354 via the component interface 359 (e.g., through a wired or wireless network connection).

The first ground valve assembly 700 of FIG. 7, when opened, pumps hydraulic fluid from the outputs of one or more of the NRVs 304 into the second input 710 of the second ground valve assembly 705 to control the position of the valve spool 706 of the second ground valve assembly 705. The first ground valve assembly 700 includes the ground valve position controller 701 to control the solenoid valve 702 to pump out hydraulic fluid from the output 704 or blocked hydraulic fluid from being pumped from the output 704. The ground valve position controller 701 obtains a control signal from the protection valve controller 354 via the component interface 359. The control signal may be a first or second amount of current. For example, if no current is applied to the ground valve position controller 701, the ground valve position controller 701 controls the solenoid valve 702 (also referred to as a GBE solenoid) of the first ground valve assembly 700 to block any hydraulic fluid from being output at the output 704. When a threshold amount of current is applied to the ground valve position controller 701, the ground valve position controller 701 moves a valve spool of the solenoid valve 702 to pump the hydraulic fluid from the input 703 toward the output 704 and into the second input 710 of the second ground valve assembly 705. The protection valve controller 354 only opens the first ground valve assembly 700 when the aircraft is grounded. Accordingly, when in flight, the protection valve controller 354 causes the first ground valve assembly 700 to close to prevent hydraulic fluid from entering the first gallery 342. Thus, the beta tube 345a is structurally disabled from moving the blade 106 into a ground pitch angle, as further described below in conjunction with FIG. 8. However, when grounded, the protection valve controller 354 can cause the solenoid valve 702 to pump hydraulic fluid into the second input 710 of the second ground valve assembly 705 to further move the beta tube 345a into a ground pitch angle.

The second ground valve assembly 705 of FIG. 7 is a cylindrical valve assembly that includes the first input 709 connected to the third port 335 of the sleeve 320. The second ground valve assembly 705 further includes the second input 710 connected to the output 704 of the first ground valve assembly 700. The second ground valve assembly 705 further includes the first output 711 connected to a drain and the second output 712 connected to the first gallery 342 via the first port 339 of the hydraulic fluid transfer unit 338.

The second ground valve assembly 705 of FIG. 7 includes the valve spool 706 structured to move from a first position to a second position. For example, when hydraulic fluid from the first ground valve assembly 700 is being pumped into the second input 710, the hydraulic fluid causes the valve spool 706 to move rearward in the orientation of FIG. 7. When fluid from the first ground valve assembly 700 is not pumped into the second input 710, the hydraulic fluid is drained via the first output 711, causing the valve spool 706 to move forward in the orientation of FIG. 7. The valve spool 706 is a cylindrical valve spool that includes solid portions and open portions (also referred to as open areas). The open portions of the valve spool 706 make up the passages 707, 708. The passages 707, 708 are separated so that any hydraulic fluid in one passage cannot directly flow into another passage within the second ground valve assembly 705. In some positions (e.g., locations), one or more solid portions of the valve spool 706 can block or plug one or more of the inputs 709, 710 or the outputs 711, 712. In other positions, one or more of the solid portions of the valve spool 706 do not block or plug one or more of the inputs 709, 710 or the outputs 711, 712, allowing the hydraulic fluid to flow into and/or out of one or more of the passages 707, 708.

When the valve spool 706 of FIG. 7 is in the position of FIG. 7 (e.g., with hydraulic fluid being pumped into the second input 710 because the protection valve controller 354 causes the first ground valve assembly 700 to open), the first input 709 opens the first passage 707 and the second passage 708 opens to the second output 712. Thus, any hydraulic fluid in the second passage 708 is pumped into the first gallery 342. Thus, when the valve spool 706 is in the position of FIG. 7, the beta tube 345a is allowed to move the blade 106 into the ground pitch angle through hydraulic fluid being pumped into the fine pitch chamber 347 via the connections 346 and the gallery 342. When the first ground valve assembly 700 is closed, the first ground valve assembly 700 does not pump hydraulic fluid into the second input 710 of the second ground valve assembly 705 to cause the valve spool 706 to move to a second position, as further described below in conjunction with FIG. 8.

FIG. 8 illustrates the valve spool 706 in a second position corresponding to enabling the beta tube 345a from moving to a position corresponding to an in flight pitch angle.

When the protection valve controller 354 determines that the aircraft is in flight and locks the ability for the blade 106 to move to the ground pitch angle, the protection valve controller 354 outputs a control signal to the valve spool position controller 319 via the component interface 359 to cause the valve spool 321 of the sleeve 320 to move to the flight/ground range enable position. Additionally, the protection valve controller 354 outputs a control signal to the ground valve position controller 701 of the first ground valve assembly 700 via the component interface 359 to prevent the solenoid valve 702 from pumping hydraulic fluid at the input 703 to the second input of the second ground valve assembly 705 via the output 704.

As described above, when hydraulic fluid is not pumped into the second input 710 of the second ground valve assembly 705, the valve spool 706 moves to the position of FIG. 8 (e.g., forward). In the position of FIG. 8, the first input 709 opens up to the second passage 708 and the second passage 708 does not open to the second output 712. Accordingly, even when the sleeve 320 is pumping hydraulic fluid out from the third port 335, the hydraulic fluid will not be able to enter the first gallery 342, thereby preventing the blade 106 from reaching a ground pitch angle.

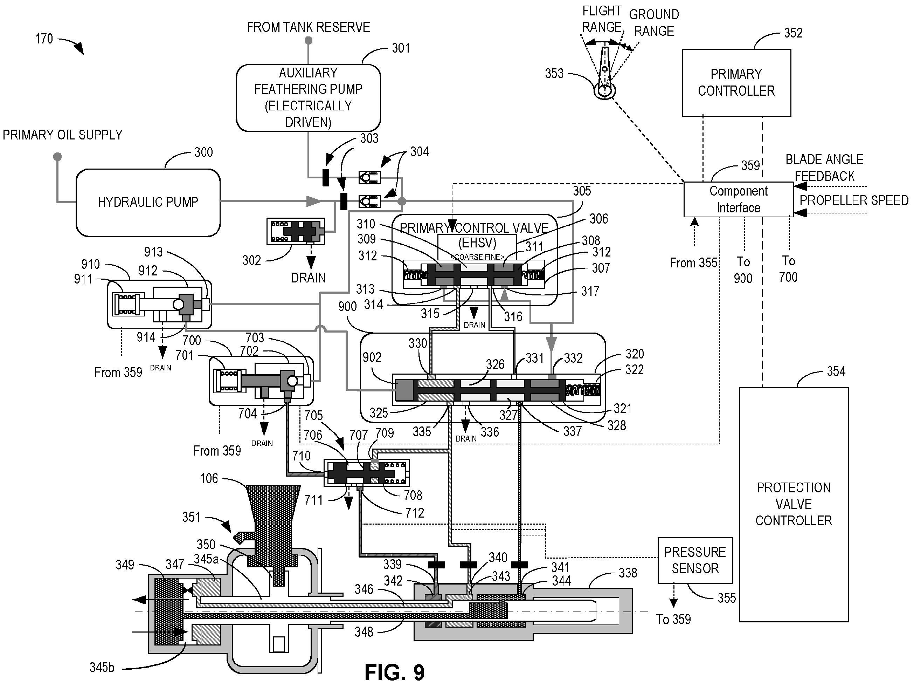

FIG. 9 illustrates an alternative example implementation of the pitch control protection system 170 of FIGS. 1A and 1B. In FIG. 9, the protection valve assembly 318 of FIG. 3 is replaced with an alternative protection valve assembly 900 (also referred to as a spool valve) including a chamber 902. The protection valve assembly 900 does not include the spool valve position controller 319. Rather, the position/location of the valve spool 321 depends on the single spring 322 or the output of a spool position valve assembly 910. The spool position valve assembly 910, includes an example valve position controller 911, an example solenoid valve 912, an example input 913, and an example port 914.

The spool position valve assembly 910 of FIG. 9 includes the input 913 connected to the hydraulic pumps 300, 301 via the strainers 303 and the NRVs 304. The spool position valve assembly 910 further includes the port 914 connected to the chamber 902 of the protection valve assembly 900. Additionally, the spool position valve controller 911 is connected to the protection valve controller 354 via the component interface 359 (e.g., through a wired or wireless network connection).

The spool position valve assembly 910 includes the spool position valve controller 911 to control the solenoid valve 912 to allow hydraulic fluid to flow from the input 913 to port 914 or allow hydraulic fluid to flow from port 914 to drain. The spool position valve controller 911 obtains a control signal from the protection valve controller 354 via the component interface 359. The control signal may be a first or second amount of current. For example, if no current is applied to the spool position valve controller 911, the spool position valve controller 911 controls the solenoid valve 912 (also referred to as a GBE solenoid) of the spool position valve assembly 910 to allow hydraulic fluid to flow out from the port 914 into the chamber 902 of the protection valve 900. When a threshold amount of current is applied to the spool position valve controller 911, the spool position valve controller 911 moves a valve spool of the solenoid valve 912 to block the hydraulic fluid from flowing into the port 913 and allow hydraulic fluid from the port 914 to drain, as shown in FIG. 10.

In FIG. 9, the spool position valve controller 911 has received a signal to open the spool valve assembly 910. When the spool position valve assembly 910 is open, the spool position valve assembly 910 allows hydraulic fluid to flow and/or to be pumped from the outputs of one or more of the NRVs 304 into the chamber 902 of the protection valve 900. The pressure of the hydraulic fluid is enough to overcome the pressure of the spring 322 to cause the spool 321 to be in the first position of FIG. 9. The first position of FIG. 9 corresponds to the first position of FIG. 3 (e.g., where hydraulic fluid to/from the first port 330 can flow to/from the third port 335 and hydraulic fluid to/from the second port 331 can flow to/from the fourth port 337).

Although the protection valve 318 of FIGS. 3-6 can be controlled to move the spool 321 to be located into four positions/locations, the protection valve 900 can be controlled by hydraulic fluid being pumped into the chamber 902 or can be controlled by the spring 322 to move the spool 321 to be located into two locations (e.g., the first location of FIG. 9 corresponding to the flight/ground range enable location of FIG. 3 and the second location of FIG. 10 corresponding to the maximum drive source location of FIG. 6).

FIG. 10 illustrates an alternative example implementation of the pitch control protection system 170 of FIGS. 1A and 1B with the spool 321 in a second position corresponding to maximum drive coarse (e.g., which corresponds to the position of the spool 321 in FIG. 6).

The spool position valve assembly 910 includes the spool position valve controller 911 to control the solenoid valve 912 to allow hydraulic fluid to flow from the input 913 to port 914 or allow hydraulic fluid to flow from port 914 to drain. The spool position valve controller 911 obtains a control signal from the protection valve controller 354 via the component interface 359. The control signal may be a first or second amount of current. For example, when a threshold amount of current is applied to the spool position valve controller 911, the spool position valve controller 911 moves a valve spool of the solenoid valve 912 to block the hydraulic fluid from flowing into the port 913 and cause hydraulic fluid from the chamber 902 to flow out through the drain through port 914.

In FIG. 10, the spool position valve controller 911 has received a signal to close the spool valve assembly 910. When the spool position valve assembly 910 is closed, the spool position valve assembly 910 prevents/blocks hydraulic fluid into the port 913 and allows hydraulic fluid from the port 914 to flow to the drain. Thus, hydraulic fluid is not pumped into the chamber 902 of the protection valve 900. Accordingly, there is little to no pressure in the chamber 902, allowing the spring 322 to push the spool 321 to the left (in the orientation of FIG. 10) to the maximum drive coarse position. The movement of the spool 321 can cause hydraulic fluid previously in the chamber 902 to flow back into the port 914 and out from toward a drain. The second (maximum drive coarse) position of FIG. 10 corresponds to the fourth position of FIG. 6 (e.g., where hydraulic fluid from the input 332 can flow to the fourth port 337 and into the coarse pitch chamber 349).

In the disclosed examples, the valve spool 308 of the primary control valve assembly 305 can move to cause hydraulic fluid to be output via the first and third outputs 314, 316 to enable adjustments to propeller pitch. In some examples, the valve spool 308 and the valve spool 321 of the protection valve assembly 318 can move at the same time or substantially the same time. For example, while the primary control valve assembly 305 operates to control pitch, the protection valve controller 354 can override the actions of the primary control valve assembly 305 if the protection valve controller 354 detects, for example, a primary system malfunction.

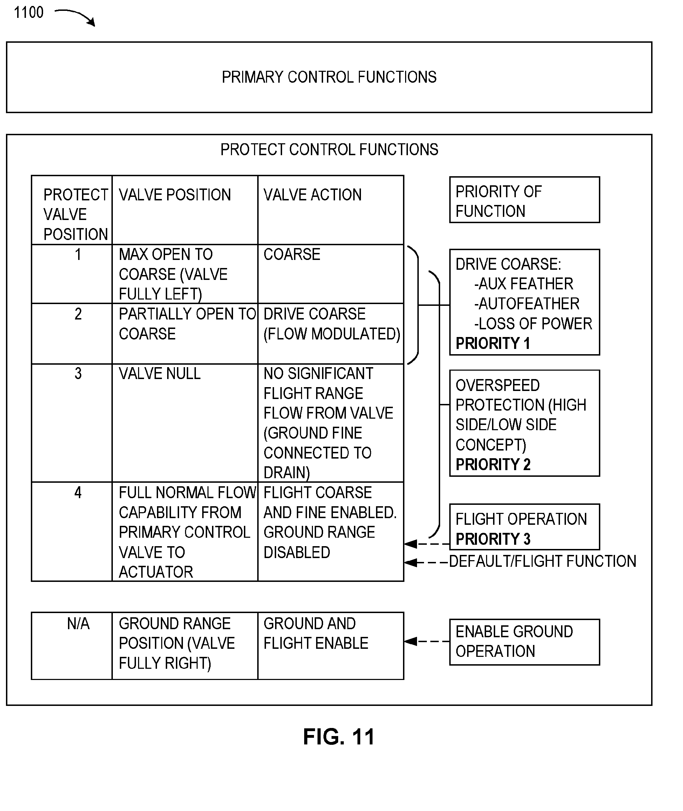

FIG. 11 illustrates the example protect control functions 1100 that can be implemented by the protection valve controller 354 to control the position of the valve spool 321 in the protection valve assembly 318, the ground valve assembly 360, 700, and/or the spool position valve assembly 910 of FIGS. 3-10. FIG. 11 includes five functions 1100 that correspond to the valve spool positions of FIGS. 3-10, namely, a maximum drive coarse position, a partial drive coarse position, a valve null position, a flight range position, and a ground range enabled position. For example, protect valve position 1 corresponds to placing the valve spool 321 of the sleeve 320 into the maximum drive coarse position illustrated in FIGS. 6 and 10. Protect valve position 2 corresponds to placing the valve spool 321 of the sleeve 320 into the partial drive coarse position illustrated in FIG. 4. Protect valve position 3 corresponds to placing the valve spool 321 of the sleeve 320 into the valve null position illustrated in FIG. 5. Protect valve position 4 corresponds to placing the valve spool 321 of the sleeve 320 into the flight/ground range position illustrated in FIGS. 3 and 9. In protect valve position 4, to enable ground range, the protection valve controller 354 causes the ground valve assembly 360, 700 to open to enable hydraulic fluid to be able to be pumped into the first gallery 342 to enable the additional hydraulic fluid to pump into the fine pitch chamber 347 to move the blade 106 into the ground pitch range, as further described above. Also, the valve spool 321 of the sleeve 320 can be placed into the ground range enabled position as disclosed in connection with FIGS. 7 and 8.

The protection valve controller 354 outputs a different signal (e.g., a different amount of current) to the valve spool position controller 319 via the component interface 359 to cause the valve spool 321 to move to one of the four valve positions and/or to cause the ground valve assembly 360, 700 to open or close. In some examples, the protection valve controller 354 outputs a binary signal to the valve position controller 911 via the component interface 359 to cause the spool position valve assembly 910 to output or block hydraulic fluid to/from the chamber 902 of the protection valve 900 to cause the valve spool 321 to move to one of two valve positions. As described above, the protection valve controller 354 moves the valve spool 321 to the first position to cause the blade 106 to move to a coarse pitch angle. The protection valve controller 354 moves the valve spool 321 to the second position to cause the blade 106 to move to a coarse pitch angle at a slower pace than the pace associated with the maximum drive coarse position. The protection valve controller 354 moves the valve spool 321 to the third position to cause the blade 106 to not move or to be controlled by the counterweight 351. The protection valve controller 354 moves the valve spool 321 to the fourth position to cause the blade 106 to move to a pitch angle based on the fluid output from the primary sleeve 307 and/or to enable the blade 106 to reach a ground pitch angle (e.g., when the ground valve assembly 360, 700 is open/enabled).

By default, the protection valve controller 354 outputs a signal to the valve spool position controller 319 of the sleeve 320 or the valve position controller 911 of the protection valve 900 via the component interface 359 to cause the valve spool 321 to move to the fourth position, the full default (e.g., normal) flow capability position corresponding to FIGS. 3 and 9. When the protection valve controller 354 determines that the propeller speed is too high (e.g., relative to an overspeed limit) or the pitch of the blade 106 is lower than intended (e.g., relative to a pitch threshold), the protection valve controller 354 changes the signal to cause the valve spool 321 to move to the third position (e.g., the valve null position) or the first position (e.g., maximum drive coarse position). When the protection valve controller 354 determines that the propeller speed has lowered (e.g., relative to an overspeed limit) or the pitch of the blade is higher (e.g., relative to a pitch threshold), the protection valve controller 354 may change the signal back to move the valve spool 321 back to the default (e.g., normal) flow/flight range position. When the protection valve controller 354 determines that the propeller speed is still too high (e.g., relative to an overspeed limit) or the pitch of the blade is still too low (e.g., relative to a pitch threshold), the protection valve controller 354 changes the signal to the partial drive coarse position (e.g., position 2). When the protection valve controller 354 determines that the propeller speed has lowered (e.g., relative to an overspeed limit) or the pitch of the blade is higher (e.g., relative to a pitch threshold), the protection valve controller 354 may change the signal back to move the valve spool 321 back to the valve null position. When the protection valve controller 354 determines that the propeller speed is still too high (e.g., relative to an overspeed limit) or the pitch of the blade is still too low (e.g., relative to a pitch threshold), the protection valve controller 354 changes the signal to a signal corresponding to the maximum drive coarse position (e.g., position 1). The protection valve controller 354 maintains the signal corresponding to the maximum drive coarse position until the propeller speed slows by a particular amount or the pitch of the blade increases by a particular amount. The protection valve controller 354 executes control algorithm(s) that output signal demand(s) to, for example, the protection valve assembly 318, for position(s) between the default (e.g., normal) flow/flight range position and the fully drive coarse position. The control algorithm(s) can include a Proportional-Integral-Derivative (PID) algorithm that calculates a control error from desired outputs and a valve position request. For example, if a speed increase exceeds an overspeed limit, the PID algorithm determines an amount to open the valve 318 as a function of how fast the propeller is accelerating and the amount the propeller has accelerated. The control algorithm(s) executed by the protection valve controller 354 continue to modulate the valve position to stabilize speed at a speed set point.

If there are contradictory instructions or feedback obtained via the component interface 359, the protection valve controller 354 utilizes a priority of positions to determine a position of the valve spool 321. The highest priority (e.g., priority 1) corresponds to driving coarse due for auxiliary (e.g., feathering caused by an electrically driven pump from a reserve oil supply), feathering, auto-feathering, and/or loss of power, the second highest priority (e.g., priority 2) corresponds to overspeed protection, and the lowest priority (e.g., priority 3) corresponds to default (e.g., normal) flight operation and/or ground operation. For example, when the aircraft is operating in flight operation (e.g., priority 3), the protection valve controller 354 outputs a signal to move the valve spool 321 via the component interface 359 when a higher priority functionality is triggered. When the aircraft is operating in overspeed protection mode (e.g., priority 2) because the protection valve controller 354 has determined that the propeller speed is too high, as described above, the overspeed protection mode takes priority over a pilot selected flight operation mode. Thus, the protection valve controller 354 may override the primary control valve assembly 305 using one of the protect valve positions 1-4 to reduce propeller speed. In the overspeed protection mode, the amount of opening of the protection valve 318 (e.g., a proportional servo valve) is a function of propeller overspeed at a point in time as computed by the protection valve controller 354 (e.g., proportional valve position versus input signal). Thus, the amount of opening of the protection valve 318 can be anywhere between protect valve positions 1-4. When ground mode is enabled, then the protection valve controller 354 outputs a signal via the component interface 359 to move the valve spool 321 into the flight/ground range position and the ground valve assembly 360, 700 is enabled unless auxiliary feathering, auto-feathering, or loss of power occurs. When drive coarse is enabled, the protection valve controller 354 outputs a signal via the component interface 359 to move the valve spool 321 to the maximum drive coarse position or the partial drive coarse position regardless of instructions from a pilot or the system.

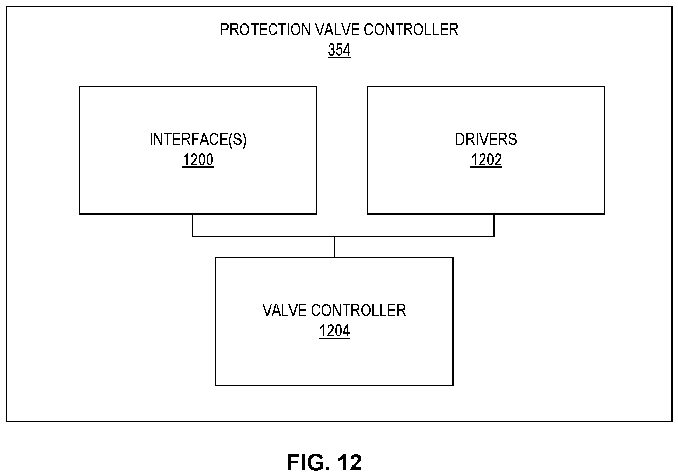

FIG. 12 is a block diagram of an example implementation of the protection valve controller 354 of FIGS. 3-10. The protection valve controller 354 includes example interface(s) 1200, an example driver 1202, and an example valve controller 1204.

The interface(s) 1200 of FIG. 12 obtain(s) information from the primary controller 352 (e.g., pilot instructions, flight modes, autopilot instructions, etc.) via the component interface 359. Additionally, the interface(s) 1200 obtain(s) feedback information from one or more sensors that relates to the blade 106 via the component interface 359. For example, the interface(s) 1200 can obtain propeller speed, pitch angles measurements of the blade 106, and/or sensor readings from the pressure sensor 355. The interface(s) 1200 may include one interface to obtain all signals, or multiple interface(s) 1200 to obtain the multiple signals.

The drivers 1202 of FIG. 12 drive the valve spool position controller 319 to move the valve spool 321 to one or more particular positions and/or drive the ground valve assembly 360, 700 to enable or disable the ground valve assembly 360, 700. For example, a first one of the drivers 1202 is capable of outputting different amounts of current, each amount of current corresponding to moving the valve spool 321 to a different position and a second one of the drivers 1202 is capable of a high current signal or a low (e.g., zero) current signal corresponding to enabling or disabling the ground valve assembly 360, 700. The drivers 1202 are controlled by the valve controller 1204.

The valve controller 1204 determines a position for the valve spool 321 based on flight mode, pilot instructions, system instructions, autopilot instructions, feedback information, etc. By default, the valve controller 1204 determines the position for the valve spool 321 to be the flight/ground range position of FIG. 3. However, when the valve controller 1204 determines that overspeed protection is needed, the valve controller 1204 determines a different position for the valve spool (e.g., corresponding to FIGS. 4-10), as further described above. When the valve controller 1204 obtains an indication that ground operation has been enabled (e.g., the aircraft is grounded), the valve controller 1204 determines the position for the valve spool 321 to be the flight/ground range position of FIGS. 3 and 9 and enables the ground valve assembly 360, 700, as further described above. When the valve controller 1204 obtains an indication to drive coarse (e.g., due to loss of power, auto-feathering instructions, auxiliary feathering instructions, etc.), the valve controller 1204 determines the position for the valve spool 321 to be the maximum drive coarse position of FIGS. 6 and 10 or the partial drive coarse position of FIG. 4. Additionally, the valve controller 1204 may determine that there is a friction issue, a valve issue, or an issue with the counterweight 351, based on one or more pressure measurements from the pressure sensor 355, as further described above. The valve controller 1204 can trigger alerts based on the determined issue(s). The valve controller 1204 controls the driver 1202 based on the determined valve spool position.

While an example manner of implementing the protection valve controller 354 of FIGS. 3-10 is illustrated in FIG. 12, one or more of the elements, processes, and/or devices illustrated in FIG. 12 may be combined, divided, re-arranged, omitted, eliminated, and/or implemented in any other way. Further, the interface(s) 1200, the driver 1202, the valve controller 1204, and/or, more generally, the example protection valve controller 354 of FIG. 12, may be implemented by hardware alone or by hardware in combination with software and/or firmware. Thus, for example, the interface(s) 1200, the driver 1202, the valve controller 1204, and/or, more generally, the example protection valve controller 354, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example protection valve controller 354 of FIG. 12 may include one or more elements, processes, and/or devices in addition to, or instead of, those illustrated in FIG. 12, and/or may include more than one of any or all of the illustrated elements, processes, and devices.

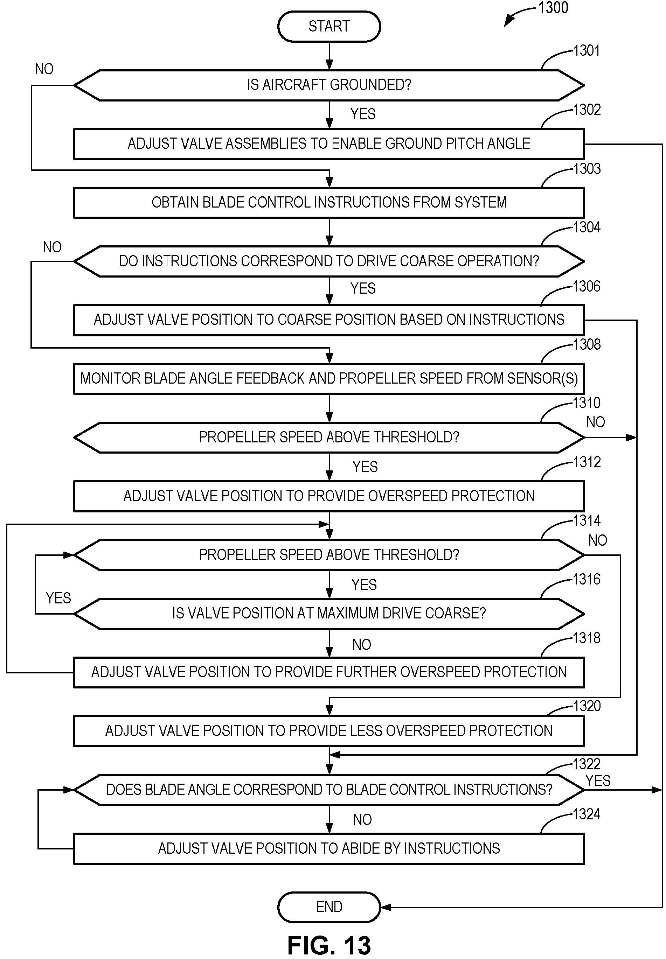

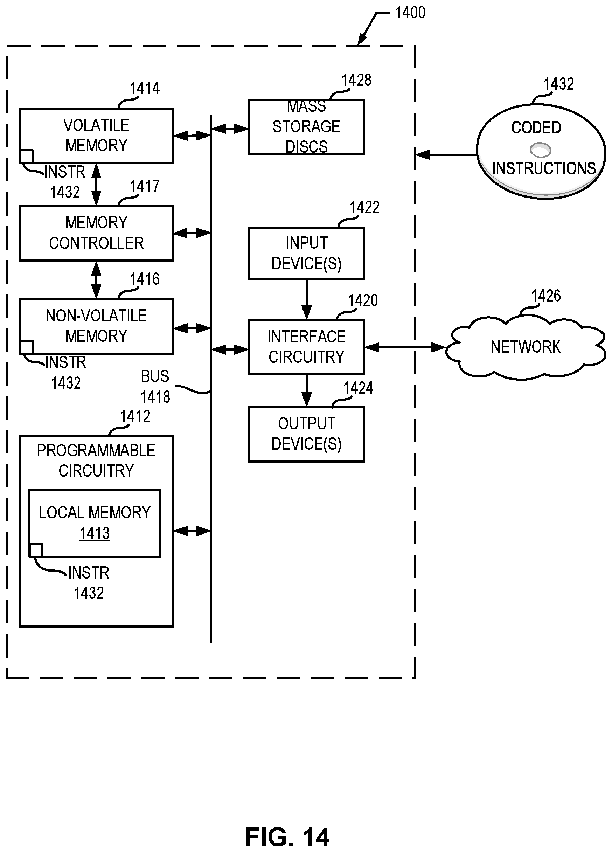

A flowchart representative of example machine-readable instructions, which may be executed by programmable circuitry to implement and/or instantiate the protection valve controller 354 of FIG. 12 and/or representative of example operations which may be performed by programmable circuitry to implement and/or instantiate the protection valve controller 354 of FIG. 12, is shown in FIG. 13. The machine-readable instructions may be one or more executable programs or portion(s) of one or more executable programs for execution by programmable circuitry such as the programmable circuitry 1412 shown in the example processor platform 1400 discussed below in connection with FIG. 14 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or another storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart illustrated in FIG. 13, many other methods of implementing the example protection valve controller 354 may alternatively be used. For example, the order of execution of the blocks of the flowchart may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks, and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 13 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic, and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIG. 13 is a flowchart representative of example machine-readable instructions and/or example operations 1300 that may be executed, instantiated, and/or performed by programmable circuitry (e.g., the protection valve controller 354 of FIG. 12) to control the pitch control protection system 170 of FIGS. 1A, 1B, and 3-7. The example machine-readable instructions and/or the example operations 1300 of FIG. 13 begin at block 1301, at which valve controller 1204 determines whether the aircraft is grounded. For example, the valve controller 1204 can obtain data from sensors and/or obtain a signal from the FADEC 180 and/or the primary controller 352 to indicate that the aircraft is grounded. When the valve controller 1204 determines that the aircraft is grounded (block 1301: YES), the valve controller 1204 causes the drivers 1202 to output control signals to the valve spool position controller 319, the ground valve position controller 361, and/or the spool position valve controller 911 to cause the valve spool 321 to move to the flight/ground position of FIG. 3 and enable/open the ground valve assemblies 360, 700 to enable hydraulic fluid to enter the first gallery 342 of the hydraulic fluid transfer unit 338 (block 1302).

If the valve controller 1204 determines that the aircraft is not grounded (e.g., is in flight) (block 1301: NO), the interface(s) 1200 obtains blade control instructions from the system (e.g., from the primary controller 352) (block 1303). The blade control instructions may identify whether the aircraft is in flight or grounded, the operation mode of the aircraft (e.g., takeoff, autopilot, landing, etc.), instructions and/or triggers (e.g., auto-feathering instruction, power loss instructions, pilot instructions, etc.), etc. When no instructions are obtained, one of the drivers 1202 drives the valve spool 321 of the sleeve 320 to the flight/ground range position of FIG. 3 (e.g., the default position). In some examples, if no instructions are obtained, the one or more drivers 1202 do not output a signal and the springs 322 position the valve spool 321 to the flight/ground range position of FIG. 3.

At block 1304, the valve controller 1204 determines whether the instructions correspond to ground enable operation or drive coarse operation. As described above, ground enable operation is enabled when the aircraft is grounded and coarse operation may be based on a trigger (e.g., power loss, auto-feathering, auxiliary feathering, etc.). When the valve controller 1204 determines that the instructions do not correspond to ground operation of drive coarse operation (block 1304: NO), control continues to block 1308, as further described below. When the valve controller 1204 determines that the instructions correspond to ground operation or drive coarse operation (block 1304: YES), the valve controller 1204 causes the driver 1202 to output a control signal to the valve spool position controller 319 of the protection valve assembly 318 or the spool position valve controller 911 to adjust the position of the valve spool 321 to the ground position of FIG. 7 (e.g., when the instructions correspond to ground operation) or the maximum drive coarse or partial drive coarse position of FIGS. 5, 6, or 10 (e.g., when the instructions correspond to drive coarse operation) (block 1306). As described above, drive coarse operation is based on a power loss event, an auto-feathering event, an auxiliary feathering event, etc. and ground operation corresponds to when the aircraft is grounded or not in flight.

At block 1308, the valve controller 1204 monitors the blade angle feedback information and/or propeller speed from one or more sensor(s) (e.g., obtained via the interface(s) 1200). At block 1310, the valve controller 1204 determines whether the propeller speed is above a threshold (e.g., between 102%-105% of the takeoff propeller speed, where the propeller speed may be 850 to 200 revolutions per minute, depending on propeller diameter). When the valve controller 1204 determines that the propeller speed is not above a threshold (block 1310: NO), control continues to block 1322, as further described below. When the valve controller 1204 determines that the propeller speed is above a threshold (block 1310: YES), the valve controller 1204 causes the driver 1202 to output a signal to the valve spool position controller 319 of the protection valve assembly 318 or spool position valve controller 911 to adjust the position of the valve spool 321 to provide overspeed protection (block 1312). For example, the valve controller 1204 can cause the valve spool 321 of the protection valve assembly 318 to move (a) from the flight/ground range position of FIG. 3 to the valve null position of FIG. 5, (b) from the valve null position of FIG. 5 to the partial drive coarse position of FIG. 4, or (c) from the partial drive coarse position of FIG. 4 to the maximum drive coarse position of FIG. 6, causing the blade to either stop adjusting pitch angle or increasing the pitch angle to a coarser pitch angle.

At block 1314, the valve controller 1204 determines whether the propeller speed is still above the threshold. When the valve controller 1204 determines that the propeller speed is no longer above the threshold (block 1314: NO), the valve controller 1204 causes the driver 1202 to output a control signal to the valve spool position controller 319 of the protection valve assembly 318 or the spool position valve controller 911 to cause the valve spool 321 to provide less overspeed protection (block 1320) and control continues to block 1322, as further described below. For example, the valve controller 1204 can output a control signal to cause the valve spool 321 to move to the flight/ground range position of FIG. 3. When the valve controller 1204 determines that the propeller speed is still above the threshold (block 1314: YES), the valve controller 1204 determines whether the current position of the valve spool 321 is at the maximum drive coarse position of FIG. 6 (block 1316). When the valve spool position is not at maximum drive coarse position, the valve spool 321 can be moved to provide additional overspeed protection (i.e., because the valve spool position has not yet reached the maximum drive coarse position). If the valve controller 1204 determines that the current position of the valve spool 321 is at the maximum drive coarse position of FIG. 6 (block 1316: YES), control returns to block 1314 for continued monitoring of whether the propeller speed is still above the threshold. Control proceeds to block 1320 when the valve controller 1204 determines that the propeller speed is no longer above the threshold, at which time the valve spool 321 can be moved to provide less overspeed protection.

At block 1322, the valve controller 1204 determines whether the blade angle corresponds to the blade control instructions. The valve controller 1204 may process the blade control instructions and determine whether the blade pitch angle projected to a pitch angle that corresponds to the blade control instructions. For example, when the blade control instructions correspond to adjusting the pitch angle of the blade 106 to a coarse pitch but the blade pitch is moving toward a fine pitch angle, the valve controller 1204 determines that the blade angle does not correspond to the blade control instructions. In another example, when the blade control instructions correspond to adjusting the pitch angle of the blade 106 to a coarse pitch but the blade pitch is adjusting at a rate below a threshold rate, the valve controller 1204 determines that the blade angle does not correspond to the blade control instructions. When the valve controller 1204 determines that the blade angle corresponds to the blade control instructions (block 1322: YES), the instructions 1300 end. When the valve controller 1204 determines that the blade angle does not correspond to the blade control instructions (block 1322: NO), the valve controller 1204 causes the driver 1202 to output a control signal to the valve spool position controller 319 or the spool position valve controller 911 to adjust the position of the valve spool 321 in the sleeve 320 to abide by the instructions (block 1324). The instructions 1300 end when the valve controller 1204 determines that the blade angle corresponds to the blade control instructions (block 1322: YES).

FIG. 14 is a block diagram of an example programmable circuitry platform 1400 structured to execute and/or instantiate the example machine-readable instructions and/or the example operations of FIG. 13 to implement the protection valve controller 354 of FIGS. 3-8 and 12. The programmable circuitry platform 1400 can be, for example, a server, a computer, a controller, a self-learning machine (e.g., a neural network), or any other type of computing and/or electronic device.

The programmable circuitry platform 1400 of the illustrated example includes programmable circuitry 1412. The programmable circuitry 1412 of the illustrated example is hardware. For example, the programmable circuitry 1412 can be implemented by one or more integrated circuits, logic circuits, FPGAs, microprocessors, CPUs, GPUs, DSPs, and/or microcontrollers from any desired family or manufacturer. The programmable circuitry 1412 may be implemented by one or more semiconductor based (e.g., silicon based) devices. The programmable circuitry 1412 can implement the interface(s) 1200, driver 1202, and the valve controller 1204 of FIG. 12.

The programmable circuitry 1412 of the illustrated example includes a local memory 1413 (e.g., a cache, registers, etc.). The programmable circuitry 1412 of the illustrated example is in communication with main memory 1414, 1416, which includes a volatile memory 1414 and a non-volatile memory 1416, by a bus 1418. The volatile memory 1414 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1416 may be implemented by flash memory and/or any other desired type of memory device. Access to the main memory 1414, 1416 of the illustrated example is controlled by a memory controller 1417. In some examples, the memory controller 1417 may be implemented by one or more integrated circuits, logic circuits, microcontrollers from any desired family or manufacturer, or any other type of circuitry to manage the flow of data going to and from the main memory 1414, 1416.

The programmable circuitry platform 1400 of the illustrated example also includes interface circuitry 1420. The interface circuitry 1420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1422 are connected to the interface circuitry 1420. The input device(s) 1422 permit(s) a user (e.g., a human user, a machine user, etc.) to enter data and/or commands into the programmable circuitry 1412. The input device(s) 1422 can be implemented by, for example, an audio sensor, a microphone, a camera (still or video), a keyboard, a button, a mouse, a touchscreen, a trackpad, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1400 of the illustrated example also includes one or more mass storage discs or devices 1428 to store firmware, software, and/or data. Examples of such mass storage discs or devices 1428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

Machine-readable instructions 1432, which may be implemented by the machine-readable instructions of FIG. 13, may be stored in the volatile memory 1414, in the non-volatile memory 1416, and/or on at least one non-transitory computer-readable storage medium such as a CD or DVD which may be removable.

From the foregoing, it will be appreciated that example systems, apparatus, articles of manufacture, and methods have been disclosed to control pitch of a propeller blade. Examples described herein provide an example blade pitch control system including a hydraulic system providing various pitch control functions using less valves than traditional techniques. Additionally, examples disclosed herein include a propeller pitch control system that combines protection function into a single valve for propellers employing a dual acting hydraulic pitch actuator. The disclosed dual acting propeller is able to control propeller pitch with a higher bandwidth and more linear system gain, which improves accuracy of propeller speed and accuracy of synchrophase control (e.g., to reduce noise). Additionally, examples disclosed herein provide independent electronically controlled overspeed protection and/or auto feather fully integrated into one protection valve. In some examples, ground beta enable is achieved by a ground beta enabled (GBE) solenoid. Additionally, examples disclosed herein include a controller to trigger various protection functions with a specific hierarchy to meet operational and safety requirements. Because examples disclosed herein utilize less components offering less failure points, examples disclosed herein results in reduced number of parts, significant system cost reduction, significant weight reduction, improved reliability. Additionally, examples disclosed herein result in a system that can be manually initiated and/or automatically controlled for full system function testing. Thus, the disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to control pitch of a propeller blade are disclosed herein. Further aspects of the present disclosure are provided by the subject matter of the following clauses.

An engine comprising a propeller including a blade, the blade rotatable about a centerline axis to change a pitch of the blade, a coarse pitch chamber, a fine pitch chamber, a hydraulic fluid transfer unit including a first gallery, a second gallery, and a third gallery, a beta tube structured to move the blade to an angle between a feathered pitch angle and a ground pitch angle based on an amount of hydraulic fluid in at least one of the coarse pitch chamber or the fine pitch chamber, the hydraulic fluid to flow from at least one of the first gallery, the second gallery, or the third gallery into at least one of the coarse pitch chamber or the fine pitch chamber via the beta tube, a protection valve including a first input, a second input, a third input, and a valve spool, the first input of the protection valve connected to a primary control valve, the second input of the protection valve connected to the primary control valve, and the third input of the protection valve connected to a hydraulic pump, wherein, when the valve spool is in a first position, the protection valve is to connect at least one of (a) the first input of the protection valve to the fine pitch chamber via the second gallery of the hydraulic fluid transfer unit or (b) the second input of the protection valve to the coarse pitch chamber via the third gallery of the hydraulic fluid transfer unit, wherein, when the valve spool is in a second position, the protection valve is to connect the third input of the protection valve to the coarse pitch chamber via the third gallery of the hydraulic fluid transfer unit, and a ground valve assembly including an input and an output, the input of the ground valve assembly connected to the second gallery of the hydraulic fluid transfer unit, the output of the ground valve assembly connected to the first gallery of the hydraulic fluid transfer unit, the ground valve assembly to, when enabled, cause hydraulic fluid to flow to the fine pitch chamber via the first gallery.

The engine of any preceding clause, wherein the protection valve further includes a first output, a second output, a first passage, a second passage, a third passage, and a fourth passage, the first output of the protection valve connected to the second gallery of the hydraulic fluid transfer unit, the second output of the protection valve connected to the third gallery of the hydraulic fluid transfer unit.

The engine of any preceding clause, wherein when the valve spool is in a third position, the valve spool plugs the first output of the protection valve and the second output of the protection valve, the valve spool to prevent hydraulic fluid from entering the coarse pitch chamber or the fine pitch chamber.

The engine of any preceding clause, wherein when the valve spool is in the second position, the first output of the protection valve is connected to a drain via the second passage and the third input of the protection valve opens to the fourth passage and the fourth passage at least partially opens to the second output of the protection valve.

The engine of any preceding clause, wherein, when the valve spool is in the second position, hydraulic fluid from the hydraulic pump is pumped into the coarse pitch chamber without passing through the primary control valve.

The engine of any preceding clause, wherein when the valve spool is in the first position, the first input of the protection valve opens to the first passage and the first passage opens to the first output of the protection valve and the second input of the protection valve opens to the third passage and the third passage opens to the second output of the protection valve, wherein, when the valve spool is in the first position, hydraulic fluid from the first input of the protection valve is to flow into the fine pitch chamber via the second gallery of the hydraulic fluid transfer unit or hydraulic fluid from the second input of the protection valve is to flow into the coarse pitch chamber via the third gallery of the hydraulic fluid transfer unit.

The engine of any preceding clause, wherein pumping hydraulic fluid into the fine pitch chamber via the first gallery moves the blade into the ground pitch angle.

The engine of any preceding clause, wherein the ground valve assembly is a solenoid valve.

The engine of any preceding clause, wherein the input of the ground valve assembly is a first input, the ground valve assembly including a second input, further including a solenoid valve, the solenoid valve including an input and an output, the input of the solenoid valve connected to the hydraulic pump, the output of the solenoid valve connected to the second input of the ground valve assembly, the solenoid valve to engage the ground valve assembly based on a signal from a controller.

The engine of any preceding clause, further including a protection valve controller to, when a propeller speed is above a threshold, output a signal to cause the valve spool to move to the second position.

The engine of any preceding clause, wherein the protection valve controller is to, when the propeller speed is below the threshold, output a signal to cause the valve spool to move to the first position.

The engine of any preceding clause, further including a protection valve controller to, when in flight, disable the ground valve assembly.

The engine of any preceding clause, further including a protection valve controller to, when grounded, enable the ground valve assembly.

The engine of any preceding clause, further including a protection valve controller to output an alert based on a pressure measurement at the output of the ground valve assembly.

The engine of any preceding clause, further including a primary control valve including a first output and a second output, the primary control valve to allow hydraulic fluid from a hydraulic pump to flow out via the first output or the second output based on a control signal, the first output of the primary control valve connected to the first input of the protection valve and the second output of the primary control valve connected to the second input of the primary control valve.

An apparatus comprises a hydraulic pump to pump hydraulic fluid, a coarse pitch chamber, a fine pitch chamber, a beta tube structured to move in a first direction to increase a pitch angle of a blade of a propeller, and move in a second direction to decrease the pitch angle of the blade of the propeller, a primary control valve to cause the hydraulic fluid to flow into one of the coarse pitch chamber or the fine pitch chamber based on instructions from a primary controller, the beta tube to move to in the first direction when the hydraulic fluid is pumped into the coarse pitch chamber, the beta tube to move in the second direction when the hydraulic fluid is pumped into the fine pitch chamber, a protection valve, the primary control valve to cause the hydraulic fluid to flow into one of the coarse pitch chamber or the fine pitch chamber through the protection valve, and a ground valve assembly to when enabled, cause hydraulic fluid to flow to the fine pitch chamber to move the beta tube to a position that corresponds to a ground pitch angle of the blade of the propeller, and when disabled, prevent at least some hydraulic fluid from flowing to the fine pitch chamber to prevent the beta tube from reaching the position that corresponds to the ground pitch angle, and a protection valve controller to when the apparatus is grounded, enable the ground valve assembly, and when the apparatus is in flight, disable the ground valve assembly.

The apparatus of any preceding clause, wherein the protection valve controller is to, when a speed of the propeller is above a threshold, control the protection valve to (a) override the primary control valve by blocking a path between an output of the primary control valve and the one of the coarse pitch chamber or the fine pitch chamber and (b) cause the protection valve to allow the hydraulic fluid to flow into the coarse pitch chamber.

The apparatus of any preceding clause, wherein the protection valve controller is to monitor a pressure at an output of the protection valve, and generate an alert based on the pressure.

The apparatus of any preceding clause, wherein the protection valve is to monitor a pressure at an output of the protection valve, and determine an amount of friction associated with adjusting the pitch angle of the blade based on the pressure.

A protection valve assembly comprises a first input, a second input, and a third input, a first output, a second output, and a third output, and a valve spool structured to move into a plurality of positions including a first position and a second position, the valve spool including open portions that define a first passage, a second passage, a third passage, and a fourth passage, wherein when the valve spool is in the first position, the first input opens to the first passage, the second input opens to the third passage, the third input opens to the fourth passage, the first passage opens to the first output, the second passage opens to the second output, and the third passage opens to the third output, and when the valve spool is in the second position, the first input opens to the first passage, the second input opens to the third passage, the third input opens to the fourth passage, the second passage opens to the first output and the second output, and the fourth passage opens to the third output.

A turbo engine comprising a propeller including a blade, the blade rotatable about a centerline axis to change a pitch of the blade, means for changing the pitch of the blade including a first gallery, a second gallery, a third gallery, a piston, a coarse pitch chamber, and a fine pitch chamber, the piston structured to move to the blade to at least one of a fine pitch angle, a feathered pitch angle, a coarse pitch angle, or a ground pitch angle based on an amount of hydraulic fluid in the coarse pitch chamber or the fine pitch chamber, first means for controlling hydraulic fluid including a first output and a second output, the first means for controlling hydraulic fluid to pump hydraulic fluid from a hydraulic pump out via the first output or the second output based on a control signal, second means for controlling hydraulic fluid including a first input, a second input, a third input, and a piston, the first input of the second means for controlling hydraulic fluid connected to the first output of the first means for controlling hydraulic fluid, the second input of the second means for controlling hydraulic fluid connected to the second output of the first means for controlling hydraulic fluid, and the third input of the second means for controlling hydraulic fluid connected to the hydraulic pump, wherein, when the piston is in a first position, the second means for controlling hydraulic fluid is to connect at least one of (a) the first input of the second means for controlling hydraulic fluid to the coarse pitch chamber of the means for changing the pitch of the blade via the second gallery of the means for changing the pitch of the blade or (b) the second input of the second means for controlling hydraulic fluid to the fine pitch chamber of the piston assemble via the third gallery of the means for changing the pitch of the blade, wherein, when the piston is in a second position, the second means for controlling hydraulic fluid is to connect the third input of the second means for controlling hydraulic fluid to the coarse pitch chamber of the means for changing the pitch of the blade via the third gallery of the means for changing the pitch of the blade, and a ground valve assembly including an input and an output, the input of the ground valve assembly connected to the first output of the second means for controlling hydraulic fluid, the output of the ground valve assembly connected to the first gallery of the of the means for changing the pitch of the blade, the ground valve assembly to, when enabled, cause hydraulic fluid to flow to the fine pitch chamber via the first gallery.

The protection valve assembly of the preceding clause, wherein the second means for controlling hydraulic fluid further includes a first output, a second output, a first passage, a second passage, a third passage, and a fourth passage.

The protection valve assembly of any one of the preceding clauses, when the piston is in a third position, the piston plugs the first output of the second means for controlling hydraulic fluid and the second output of the second means for controlling hydraulic fluid, the piston to prevent hydraulic fluid from the hydraulic pump from entering the coarse pitch chamber or the fine pitch chamber.

The protection valve assembly of any one of the preceding clauses, wherein when the piston is in the second position, the first output of the second means for controlling hydraulic fluid is connected to a drain via the second passage and the third input of the second means for controlling hydraulic fluid opens to the fourth passage and the fourth passage at least partially opens to the second output of the second means for controlling hydraulic fluid.

The protection valve assembly of any one of the preceding clauses, wherein when the piston is in the first position, the first input of the second means for controlling hydraulic fluid opens to the first passage and the first passage opens to the first output of the second means for controlling hydraulic fluid and the second input of the second means for controlling hydraulic fluid opens to the third passage and the third passage opens to the second output of the second means for controlling hydraulic fluid, wherein, when the piston is in the first position, hydraulic fluid from the first input of the second means for controlling hydraulic fluid is pumped to the coarse pitch chamber of the means for changing the pitch of the blade via the second gallery of the means for changing the pitch of the blade or hydraulic fluid from the second input of the second means for controlling hydraulic fluid is pumped to the fine pitch chamber of the piston assemble via the third gallery of the means for changing the pitch of the blade.

The protection valve assembly of any one of the preceding clauses, wherein when the piston is in the second position, the first output of the second means for controlling hydraulic fluid is connected to a drain via the second passage and the third input of the second means for controlling hydraulic fluid opens to the fourth passage and the fourth passage at least partially opens to the second output of the second means for controlling hydraulic fluid, wherein, when the piston is in the second position, hydraulic fluid from the hydraulic pump is pumped into the coarse pitch chamber of the means for changing the pitch of the blade without passing through the first means for controlling hydraulic fluid.

The protection valve assembly of any one of the preceding clauses, wherein pumping hydraulic fluid into the fine pitch chamber via the first gallery moves the blade into the ground pitch angle.

The protection valve assembly of any one of the preceding clauses, wherein the ground valve assembly is a solenoid valve.

The protection valve assembly of any one of the preceding clauses, wherein the input of the ground valve assembly is a first input, the ground valve assembly including a second input, further including a solenoid valve, the solenoid valve including an input and an output, the input of the solenoid valve connected to the hydraulic pump, the output of the solenoid valve connected to the second input of the ground valve assembly, the solenoid valve to engage the ground valve assembly based on a signal from a controller.

The protection valve assembly of any one of the preceding clauses, further including means for outputting a signal to cause the piston to move to the second position when a propeller speed is above a threshold.

The protection valve assembly of any one of the preceding clauses, wherein the means for outputting a signal is to output a signal to cause the piston to move to the first position when the propeller speed is below the threshold.

The protection valve assembly of any one of the preceding clauses, further including means for outputting a signal to, when in flight, disable the ground valve assembly.

The protection valve assembly of any one of the preceding clauses, further including means for outputting a signal to, when grounded, enable the ground valve assembly.

The protection valve assembly of any one of the preceding clauses, wherein the second means for controlling hydraulic fluid further includes a first output and a second output, the first output of the second means for controlling hydraulic fluid connected to the second gallery, the second output of the second means for controlling hydraulic fluid connected to the third gallery.

The protection valve assembly of any one of the preceding clauses, further including means for outputting a signal to output an alert based on a pressure measurement at the output of the ground valve assembly.

An engine comprising:
a propeller including a blade, the blade rotatable about a centerline axis to change a pitch of the blade;
a coarse pitch chamber;
a fine pitch chamber;
a hydraulic fluid transfer unit including a first gallery, a second gallery, and a third gallery;
a beta tube structured to move to the blade to at least one of a fine pitch angle, a feathered pitch angle, a coarse pitch angle, or a ground pitch angle based on an amount of hydraulic fluid in the coarse pitch chamber or the fine pitch chamber, the hydraulic fluid pumped from at least one of the first gallery, the second gallery, or the third gallery into at least one of the coarse pitch chamber or the fine pitch chamber via the beta tube;
a primary control valve including a first output and a second output, the primary control valve to pump hydraulic fluid from a hydraulic pump out via the first output or the second output based on a control signal;
a protection valve including a first input, a second input, a third input, and a valve spool, the first input of the protection valve connected to the first output of the primary control valve, the second input of the protection valve connected to the second output of the primary control valve, and the third input of the protection valve connected to the hydraulic pump, wherein, when the valve spool is in a first position, the protection valve is to connect at least one of (a) the first input of the protection valve to the coarse pitch chamber via the second gallery of the hydraulic fluid transfer unit or (b) the second input of the protection valve to the fine pitch chamber via the third gallery of the hydraulic fluid transfer unit, wherein, when the valve spool is in a second position, the protection valve is to connect the third input of the protection valve to the coarse pitch chamber via the third gallery of the hydraulic fluid transfer unit; and
a ground valve assembly including an input and an output, the input of the ground valve assembly connected to the first output of the protection valve, the output of the ground valve assembly connected to the first gallery of the of the hydraulic fluid transfer unit, the ground valve assembly to, when enabled, cause hydraulic fluid to flow to the fine pitch chamber via the first gallery.

The turbo engine of any one of the preceding clauses, wherein the protection valve further includes a first output, a second output, a first passage, a second passage, a third passage, and a fourth passage.

The turbo engine of any one of the preceding clauses, when the valve spool is in a third position, the valve spool plugs the first output of the protection valve and the second output of the protection valve, the valve spool to prevent hydraulic fluid from the hydraulic pump from entering the coarse pitch chamber or the fine pitch chamber.

The turbo engine of any one of the preceding clauses, wherein when the valve spool is in the second position, the first output of the protection valve is connected to a drain via the second passage and the third input of the protection valve opens to the fourth passage and the fourth passage at least partially opens to the second output of the protection valve.

The turbo engine of any one of the preceding clauses, wherein when the valve spool is in the first position, the first input of the protection valve opens to the first passage and the first passage opens to the first output of the protection valve and the second input of the protection valve opens to the third passage and the third passage opens to the second output of the protection valve, wherein, when the valve spool is in the first position, hydraulic fluid from the first input of the protection valve is pumped to the coarse pitch chamber via the second gallery of the hydraulic fluid transfer unit or hydraulic fluid from the second input of the protection valve is pumped to the fine pitch chamber via the third gallery of the hydraulic fluid transfer unit.

The turbo engine of any one of the preceding clauses, wherein when the valve spool is in the second position, the first output of the protection valve is connected to a drain via the second passage and the third input of the protection valve opens to the fourth passage and the fourth passage at least partially opens to the second output of the protection valve, wherein, when the valve spool is in the second position, hydraulic fluid from the hydraulic pump is pumped into the coarse pitch chamber without passing through the primary control valve.

The turbo engine of any one of the preceding clauses, wherein pumping hydraulic fluid into the fine pitch chamber via the first gallery moves the blade into the ground pitch angle.

The turbo engine of any one of the preceding clauses, wherein the ground valve assembly is a solenoid valve.

The turbo engine of any one of the preceding clauses, wherein the input of the ground valve assembly is a first input, the ground valve assembly including a second input, further including a solenoid valve, the solenoid valve including an input and an output, the input of the solenoid valve connected to the hydraulic pump, the output of the solenoid valve connected to the second input of the ground valve assembly, the solenoid valve to engage the ground valve assembly based on a signal from a controller.

The turbo engine of any one of the preceding clauses, further including a protection valve controller to, when a propellor speed is above a threshold, output a signal to cause the valve spool to move to the second position.

The turbo engine of any one of the preceding clauses, wherein the protection valve controller is to, when the propellor speed is below the threshold, output a signal to cause the valve spool to move to the first position.

The turbo engine of any one of the preceding clauses, further including a protection valve controller to, when inflight, disable the ground valve assembly.

The turbo engine of any one of the preceding clauses, further including a protection valve controller to, when grounded, enable the ground valve assembly.

The turbo engine of any one of the preceding clauses, wherein the protection valve further includes a first output and a second output, the first output of the protection valve connected to the second gallery, the second output of the protection valve connected to the third gallery.

The turbo engine of any one of the preceding clauses, further including a protection valve controller to output an alert based on a pressure measurement at the output of the ground valve assembly.

An apparatus comprising:
a hydraulic pump to pump hydraulic fluid;
a coarse pitch chamber;
a fine pitch chamber;
   a beta tube structured to: move in a first direction to increase a pitch angle of a blade of a propeller; and
   move in a second direction to decrease the pitch angle of the blade of the propeller;
a primary control valve to cause the hydraulic fluid to flow into one of the coarse pitch chamber or the fine pitch chamber based on instructions from a primary controller, the beta tube to move to in the first direction when the hydraulic fluid is pumped into the coarse pitch chamber, the beta tube to move in the second direction when the hydraulic fluid is pumped into the fine pitch chamber;
a protection valve, the primary control valve to cause the hydraulic fluid to flow into one of the coarse pitch chamber or the fine pitch chamber through the protection valve; and
a ground valve assembly to:
   when enabled, cause hydraulic fluid to flow to the fine pitch chamber to move the beta tube to a position that corresponds to a ground pitch angle of the blade of the propeller; and
   when disabled, prevent at least some hydraulic fluid from flowing to the fine pitch chamber to prevent the beta tube from reaching the position that corresponds to the ground pitch angle; and
   a protection valve controller to:
      when the apparatus is grounded, enable the ground valve assembly; and
      when the apparatus is inflight, disable the ground valve assembly.

The apparatus of any one of the preceding clauses, wherein the protection valve controller is to, when a speed of the propeller is above a threshold, control the protection valve to (a) override the primary control valve by blocking a path between an output of the primary control valve and the one of the coarse pitch chamber or the fine pitch chamber and (b) cause the protection valve to pump the hydraulic fluid into the coarse pitch chamber.

The apparatus of any one of the preceding clauses, wherein the protection valve controller is to:
monitor a pressure at an output of the protection valve; and
generate an alert based on the pressure.

The apparatus of any one of the preceding clauses, wherein the protection valve is to:
monitor a pressure at an output of the protection valve; and
determine an amount of friction associated with adjusting the pitch angle of the blade based on the pressure.

A protection valve assembly comprising:
a first input, a second input, and a third input;
a first output, a second output, and a third output; and
a valve spool structured to move into a plurality of positions including a first position and a second position, the valve spool including open portions that define a first passage, a second passage, a third passage, and a fourth passage, wherein:
   when the valve spool is in the first position, the first input opens to the first passage, the second input opens to the third passage, the third input opens to the fourth passage, the first passage opens to the first output, the second passage opens to the second output, and the third passage opens to the third output; and
   when the valve spool is in the second position, the first input opens to the first passage, the second input opens to the third passage, the third input opens to the fourth passage, the second passage opens to the first output and the second output, and the fourth passage opens to the third output.

An engine comprising: a propeller including a blade, the blade rotatable about a centerline axis to change a pitch of the blade; a coarse pitch chamber; a fine pitch chamber; a hydraulic fluid transfer unit including a first gallery, a second gallery, and a third gallery; a beta tube structured to move to the blade to at least one of a fine pitch angle, a feathered pitch angle, a coarse pitch angle, or a ground pitch angle based on an amount of hydraulic fluid in the coarse pitch chamber or the fine pitch chamber, the hydraulic fluid pumped from at least one of the first gallery, the second gallery, or the third gallery into at least one of the coarse pitch chamber or the fine pitch chamber via the beta tube; a primary control valve including a first output and a second output, the primary control valve to pump hydraulic fluid from a hydraulic pump out via the first output or the second output based on a control signal; a protection valve including a first input, a second input, a third input, and a valve spool, the first input of the protection valve connected to the first output of the primary control valve, the second input of the protection valve connected to the second output of the primary control valve, and the third input of the protection valve connected to the hydraulic pump, wherein, when the valve spool is in a first position, the protection valve is to connect at least one of (a) the first input of the protection valve to the fine pitch chamber via the second gallery of the hydraulic fluid transfer unit or (b) the second input of the protection valve to the coarse pitch chamber via the third gallery of the hydraulic fluid transfer unit, wherein, when the valve spool is in a second position, the protection valve is to connect the third input of the protection valve to the coarse pitch chamber via the third gallery of the hydraulic fluid transfer unit; and a ground valve assembly including an input and an output, the input of the ground valve assembly connected to the second gallery of the hydraulic fluid transfer unit, the output of the ground valve assembly connected to the first gallery of the of the hydraulic fluid transfer unit, the ground valve assembly to, when enabled, cause hydraulic fluid to flow to the fine pitch chamber via the first gallery.

The engine of any one of the preceding clauses, wherein the protection valve further includes a first output, a second output, a first passage, a second passage, a third passage, and a fourth passage, the first output of the protection valve connected to the second gallery of the hydraulic fluid transfer unit, the second output of the protection valve connected to the third gallery of the hydraulic fluid transfer unit.

The engine of any one of the preceding clauses, wherein when the valve spool is in a third position, the valve spool plugs the first output of the protection valve and the second output of the protection valve, the valve spool to prevent hydraulic fluid from entering the coarse pitch chamber or the fine pitch chamber.

The engine of any one of the preceding clauses, wherein when the valve spool is in the second position, the first output of the protection valve is connected to a drain via the second passage and the third input of the protection valve opens to the fourth passage and the fourth passage at least partially opens to the second output of the protection valve.

The engine of any one of the preceding clauses, wherein, when the valve spool is in the second position, hydraulic fluid from the hydraulic pump is pumped into the coarse pitch chamber without passing through the primary control valve.

The engine of any one of the preceding clauses, wherein when the valve spool is in the first position, the first input of the protection valve opens to the first passage and the first passage opens to the first output of the protection valve and the second input of the protection valve opens to the third passage and the third passage opens to the second output of the protection valve, wherein, when the valve spool is in the first position, hydraulic fluid from the first input of the protection valve is pumped to the fine pitch chamber via the second gallery of the hydraulic fluid transfer unit or hydraulic fluid from the second input of the protection valve is pumped to the coarse pitch chamber via the third gallery of the hydraulic fluid transfer unit.

The engine of any one of the preceding clauses, wherein pumping hydraulic fluid into the fine pitch chamber via the first gallery moves the blade into the ground pitch angle.

The engine of any one of the preceding clauses, wherein the ground valve assembly is a solenoid valve.

The engine of any one of the preceding clauses, wherein the input of the ground valve assembly is a first input, the ground valve assembly including a second input, further including a solenoid valve, the solenoid valve including an input and an output, the input of the solenoid valve connected to the hydraulic pump, the output of the solenoid valve connected to the second input of the ground valve assembly, the solenoid valve to engage the ground valve assembly based on a signal from a controller.

The engine of any one of the preceding clauses, further including a protection valve controller to, when a propeller speed is above a threshold, output a signal to cause the valve spool to move to the second position.

The engine of any one of the preceding clauses, wherein the protection valve controller is to, when the propeller speed is below the threshold, output a signal to cause the valve spool to move to the first position.

The engine of any one of the preceding clauses, further including a protection valve controller to, when inflight, disable the ground valve assembly.

The engine of any one of the preceding clauses, further including a protection valve controller to, when grounded, enable the ground valve assembly.

The engine of any one of the preceding clauses, further including a protection valve controller to output an alert based on a pressure measurement at the output of the ground valve assembly.

An apparatus comprising:
a hydraulic pump to pump hydraulic fluid;
a coarse pitch chamber;
a fine pitch chamber;
   a beta tube structured to: move in a first direction to increase a pitch angle of a blade of a propeller; and
   move in a second direction to decrease the pitch angle of the blade of the propeller;
a primary control valve to cause the hydraulic fluid to flow into one of the coarse pitch chamber or the fine pitch chamber based on instructions from a primary controller, the beta tube to move to in the first direction when the hydraulic fluid is pumped into the coarse pitch chamber, the beta tube to move in the second direction when the hydraulic fluid is pumped into the fine pitch chamber;
a protection valve, the primary control valve to cause the hydraulic fluid to flow into one of the coarse pitch chamber or the fine pitch chamber through the protection valve; and
a ground valve assembly to:
   when enabled, cause hydraulic fluid to flow to the fine pitch chamber to move the beta tube to a position that corresponds to a ground pitch angle of the blade of the propeller; and
   when disabled, prevent at least some hydraulic fluid from flowing to the fine pitch chamber to prevent the beta tube from reaching the position that corresponds to the ground pitch angle; and
   a protection valve controller to:
      when the apparatus is grounded, enable the ground valve assembly; and
      when the apparatus is inflight, disable the ground valve assembly.

The apparatus of any one of the preceding clauses, wherein the protection valve controller is to, when a speed of the propeller is above a threshold, control the protection valve to (a) override the primary control valve by blocking a path between an output of the primary control valve and the one of the coarse pitch chamber or the fine pitch chamber and (b) cause the protection valve to pump the hydraulic fluid into the coarse pitch chamber.

The apparatus of any one of the preceding clauses, wherein the protection valve controller is to: monitor a pressure at an output of the protection valve; and generate an alert based on the pressure.

The apparatus of any one of the preceding clauses, wherein the protection valve is to:
monitor a pressure at an output of the protection valve; and
determine an amount of friction associated with adjusting the pitch angle of the blade based on the pressure.

A protection valve assembly comprising:
a first input, a second input, and a third input;
a first output, a second output, and a third output; and
a valve spool structured to move into a plurality of positions including a first position and a second position, the valve spool including open portions that define a first passage, a second passage, a third passage, and a fourth passage, wherein:
   when the valve spool is in the first position, the first input opens to the first passage, the second input opens to the third passage, the third input opens to the fourth passage, the first passage opens to the first output, the second passage opens to the second output, and the third passage opens to the third output; and
   when the valve spool is in the second position, the first input opens to the first passage, the second input opens to the third passage, the third input opens to the fourth passage, the second passage opens to the first output and the second output, and the fourth passage opens to the third output.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An engine comprising:
a propeller (104) including a blade (106), the blade rotatable about a centerline axis to change a pitch of the blade;
a coarse pitch chamber (349);
a fine pitch chamber (347);
a hydraulic fluid transfer unit (338) including a first gallery (342), a second gallery (343), and a third gallery (344);
a beta tube (345a) structured to move the blade (106) to an angle between a feathered pitch angle and a ground pitch angle based on an amount of hydraulic fluid in at least one of the coarse pitch chamber (349) or the fine pitch chamber (347), the hydraulic fluid to flow from at least one of the first gallery (342), the second gallery (343), or the third gallery (344) into at least one of the coarse pitch chamber (349) or the fine pitch chamber (347) via the beta tube (345a);
a protection valve (318) including a first input (330), a second input (331), a third input (332), and a valve spool (321), the first input (330) of the protection valve connected to a primary control valve (305), the second input (331) of the protection valve connected to the primary control valve (305), and the third input (332) of the protection valve connected to a hydraulic pump (300), wherein, when the valve spool (321) is in a first position (FIG. 3), the protection valve (318) is to connect at least one of (a) the first input (330) of the protection valve to the fine pitch chamber (347) via the second gallery (343) of the hydraulic fluid transfer unit or (b) the second input (331) of the protection valve to the coarse pitch chamber (349) via the third gallery (344) of the hydraulic fluid transfer unit, wherein, when the valve spool (321) is in a second position (FIG. 4), the protection valve is to connect the third input (332) of the protection valve to the coarse pitch chamber (349) via the third gallery (344) of the hydraulic fluid transfer unit; and
a ground valve assembly (360 or 705) including an input (363 or 709) and an output (364 or 712), the input (363 or 709) of the ground valve assembly connected to the second gallery (343) of the hydraulic fluid transfer unit, the output (364 or 712) of the ground valve assembly connected to the first gallery (342) of the hydraulic fluid transfer unit, the ground valve assembly (360 or 705) to, when enabled, cause hydraulic fluid to flow to the fine pitch chamber (347) via the first gallery (342).

2. The engine of claim 1, wherein the protection valve further includes a first output (335), a second output (337), a first passage (325), a second passage (326), a third passage (327), and a fourth passage (328), the first output (335) of the protection valve connected to the second gallery (343) of the hydraulic fluid transfer unit, the second output (337) of the protection valve connected to the third gallery (344) of the hydraulic fluid transfer unit.

3. The engine of claim 2, wherein when the valve spool (321) is in a third position (FIG. 5), the valve spool (321) plugs the first output (335) of the protection valve and the second output (337) of the protection valve, the valve spool (321) to prevent hydraulic fluid from entering the coarse pitch chamber (349) or the fine pitch chamber (347).

4. The engine of claim 2, wherein when the valve spool (321) is in the second position (FIG. 4), the first output (335) of the protection valve is connected to a drain via the second passage (326) and the third input (332) of the protection valve opens to the fourth passage (328) and the fourth passage (328) at least partially opens to the second output (337) of the protection valve.

5. The engine of claim 4, wherein, when the valve spool (321) is in the second position (FIG. 4), hydraulic fluid from the hydraulic pump (300) is pumped into the coarse pitch chamber (349) without passing through the primary control valve (305).

6. The engine of claim 2, wherein when the valve spool (321) is in the first position (FIG. 3), the first input (330) of the protection valve opens to the first passage (325) and the first passage (325) opens to the first output (335) of the protection valve and the second input (331) of the protection valve opens to the third passage (327) and the third passage (327) opens to the second output (337) of the protection valve, wherein, when the valve spool is in the first position (FIG. 3), hydraulic fluid from the first input (330) of the protection valve is to flow into the fine pitch chamber (347) via the second gallery (343) of the hydraulic fluid transfer unit or hydraulic fluid from the second input (331) of the protection valve is to flow into the coarse pitch chamber (349) via the third gallery (344) of the hydraulic fluid transfer unit.

7. The engine of any preceding claim, wherein pumping hydraulic fluid into the fine pitch chamber (347) via the first gallery (342) moves the blade (106) into the ground pitch angle.

8. The engine of any preceding claim, wherein the ground valve assembly (360) is a solenoid valve.

9. The engine of any preceding claim, wherein the input (709) of the ground valve assembly (705) is a first input (709), the ground valve assembly including a second input (710), further including a solenoid valve (700), the solenoid valve including an input (703) and an output (704), the input (703) of the solenoid valve connected to the hydraulic pump (300), the output (704) of the solenoid valve connected to the second input (710) of the ground valve assembly (705), the solenoid valve to engage the ground valve assembly based on a signal from a controller.

10. The engine of any preceding claim, further including a protection valve controller (354) to, when a propeller speed is above a threshold, output a signal to cause the valve spool (321) to move to the second position (FIG. 4).

11. The engine of claim 10, wherein the protection valve controller (354) is to, when the propeller speed is below the threshold, output a signal to cause the valve spool (321) to move to the first position (FIG. 3).

12. The engine of any preceding claim, further including a protection valve controller (354) to, when in flight, disable the ground valve assembly (705).

13. The engine of any preceding claim, further including a protection valve controller (354) to, when grounded, enable the ground valve assembly (705).

14. The engine of any preceding claim, further including a protection valve controller (354) to output an alert based on a pressure measurement at the output of the ground valve assembly (318).
